(19) Europäisches Patentamt
European Patent Office
Office européen des brevets

(11) EP 1 183 400 B1

(12) FASCICULE DE BREVET EUROPEEN

(45) Date de publication et mention de la délivrance du brevet: **12.11.2003 Bulletin 2003/46**

(21) Numéro de dépôt: **00936963.8**

(22) Date de dépôt: **29.05.2000**

(51) Int Cl.[7]: **C22B 59/00**, C22B 60/02, C22B 3/28, C07C 229/16, C01G 56/00, B01D 71/00, G21F 9/06

(86) Numéro de dépôt international: **PCT/FR00/01461**

(87) Numéro de publication internationale: **WO 00/073521 (07.12.2000 Gazette 2000/49)**

# (54) PROCEDE POUR SEPARER EN MILIEU AQUEUX DES LANTHANIDES ET/OU DES ACTINIDES PAR COMPLEXATION-NANOFILTRATION, ET NOUVEAUX COMPLEXANTS MIS EN OEUVRE DANS CE PROCEDE

VERFAHREN ZUR ABTRENNUNG DER LANTHANOIDE UND/ODER DER ACTINIDEN DURCH KOMPLEXBILDUNG IN WÄSSERIGER UMGEBUNG UND NEUE KOMPLEXBILDNER DAFÜR

METHOD FOR SEPARATING IN AN AQUEOUS MEDIUM LANTHANIDES AND/OR ACTINIDES BY COMBINED COMPLEXING-NANOFILTRATION, AND NOVEL COMPLEXING AGENTS THEREFOR

(84) Etats contractants désignés: **FR GB**

(30) Priorité: **27.05.1999 FR 9906902**

(43) Date de publication de la demande: **06.03.2002 Bulletin 2002/10**

(73) Titulaires:
- **UNIVERSITE CLAUDE BERNARD - LYON 1**
  **F-69622 Villeurbanne Cédex (FR)**
- **CNAM (Conservatoire National des Arts et Metiers)**
  **75141 Paris Cedex 03 (FR)**

(72) Inventeurs:
- **GUY, Alain**
  **F-77135 Montcarré (FR)**
- **FOOS, Jacques**
  **F-91400 Orsay (FR)**
- **LEMAIRE, Marc**
  **F-69100 Villeurbanne (FR)**
- **CHITRY, Frédéric**
  **F-69100 Villeurbanne (FR)**
- **PELLET-ROSTAING, Stéphane**
  **F-69100 Villeurbanne (FR)**
- **GOZZI, Christel**
  **F-69007 Lyon (FR)**

(74) Mandataire: **Thibault, Jean-Marc**
**Cabinet Beau de Loménie**
**51, Avenue Jean Jaurès**
**B.P. 7073**
**69301 Lyon Cédex 07 (FR)**

(56) Documents cités:
**EP-B- 0 436 579**
**WO-A-95/27681**
**WO-A-98/47856**
**FR-A- 2 354 290**
**FR-A- 2 731 831**
**GB-A- 1 193 596**
**GB-A- 2 229 312**
**US-A- 5 078 986**
**US-A- 5 550 160**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 183 400 B1

Printed by Jouve, 75001 PARIS (FR)

## Description

### DOMAINE TECHNIQUE :

Le domaine de l'invention est celui de la séparation des terres rares ou lanthanides ainsi que des éléments radioactifs que sont les actinides.

L'enjeu économique et industriel de la séparation des lanthanides se situe notamment dans le cadre de l'extraction des lanthanides des minerais qui les contiennent et qui sont eux-mêmes issus de l'écorce terrestre. Par ailleurs, les lanthanides et les actinides sont présents dans les effluents radioactifs provenant de la combustion nucléaire. Il existe donc un intérêt économique et industriel crucial de pouvoir isoler sélectivement les lanthanides et les actinides.

La présente invention concerne donc un procédé pour séparer, en milieu aqueux, les lanthanides entre eux et/ou les lanthanides des actinides et/ou les actinides entre eux, ce procédé étant du type de ceux faisant intervenir des techniques de complexation-nanofiltration.

La présente invention a également pour objet l'application d'un tel procédé à la production de terres rares et au retraitement d'éléments combustibles nucléaires usés contenant des lanthanides et/ou des actinides.

La présente invention a également été propice à la mise à jour des nouveaux complexants sélectifs des lanthanides et des actinides.

### TECHNIQUE ANTERIEURE :

Les lanthanides sont présents dans l'écorce terrestre à hauteur de 0,08 % en masse. L'abondance relative des lanthanides dans les minerais, qui peut varier de 50 % à 0,01 %, rend difficile la séparation des divers lanthanides entre eux, d'autant plus que ces éléments présentent des propriétés chimiques semblables. Actuellement, les principaux procédés de production des terres rares font appel à des traitements hydrométallurgiques de minerais enrichis. Ces traitements comprennent les étapes suivantes :

- attaque des minerais par voie humide ;
- séparations et purifications des solutions obtenues mettant en oeuvre des techniques de précipitation sélective [cas des terres rares à degré d'oxydation différent de (III)], parfois des techniques d'échange d'ions sur résine, mais principalement des techniques d'extraction par solvant.
- obtention des produits finis (oxydes, sels variés) ou bien élaboration de métaux par électrolyse de sels fondus à haute température ou encore par métallothermie.

Les terres rares, du fait de leur structure électronique particulière, trouvent des applications industrielles nombreuses et variées : métallurgie, catalyse, verre, optique, céramique, électronique,...

Les actinides relèvent quant à eux de l'industrie nucléaire. La nocivité potentielle à long terme (supérieure à trois siècles) des déchets nucléaires issus des opérations de traitement-recyclage des combustibles des réacteurs électrogènes est principalement due à la présence de radionucléides à vie longue des éléments neptunium ($^{237}Np$), américium ($^{241-243}Am$) et curium ($^{243-245}Cm$), appelés actinides mineurs, par opposition aux actinides majeurs que sont l'uranium et le plutonium et qui sont recyclés vers la fabrication de nouveaux combustibles.
Dans les effluents nucléaires de haute activité, on trouve des actinides mineurs et des lanthanides à l'état d'oxydation (III). Les lanthanides constituent environ un tiers des produits de fission et sont beaucoup plus abondants que les actinides mineurs ($\simeq$3 - 5 % p/p par rapport aux lanthanides). Il est donc nécessaire de les séparer, sachant que le choix de ne pas générer de déchets solides secondaires conduit à ne retenir comme réactifs chimiques pour les nouveaux procédés, que des substances constituées uniquement de carbone (C), d'hydrogène (H), d'oxygène (O) et d'azote (N) et donc dégradables en gaz rejetables dans l'environnement à la fin de vie de ces réactifs dans les procédés.
L'extraction et la séparation des actinides mineurs, et plus particulièrement de Am et Cm dans les effluents de combustibles nucléaires usés contenant des produits de fission riches en terres rares, constitue donc un défi technologique majeur.
A l'instar des techniques de séparation en cours dans la production des terres rares à partir de minerais, on met en oeuvre des techniques de précipitation ou d'extraction liquide/liquide pour isoler les actinides mineurs dans les effluents radioactifs riches en lanthanides. Ces techniques de précipitation ou d'extraction liquide-liquide ont pour inconvénient majeur de générer des déchets qu'il convient ensuite de traiter. Cela complique notablement les procédés et cela les affecte d'un lourd handicap économique.

Il est par ailleurs connu de séparer le sodium, notamment du césium, dans des effluents aqueux provenant du retraitement d'éléments combustibles nucléaires usés. Ceci constitue l'objet du brevet français N° 2 731 831. Le procédé selon ce brevet consiste à faire réagir les effluents aqueux radioactifs contenant du sodium parmi d'autres éléments radioactifs, avec des agents complexants comme par exemple l'acide EthylèneDiamineTétraAcétique (EDTA), des poly(acides acryliques), des poly(acides vinylsulfoniques), les sels de ces polyacides, un polyéthylène-imine, ou bien encore un calixarène du type tétraméthylcalix[4]résorcinolarène. Les effluents ainsi traités sont soumis ensuite à une nanofiltration sur une membrane en ionomère perfluoré, en polyaramide ou en alumine poreuse revêtue d'une couche de polysulfone sulfonée. Pour la nanofiltration, on applique à l'effluent une pression variant de 0,25 à 1,5 MPa. Les effluents traités contiennent des ions sodium, des ions strontium, des ions $UO_2^{++}$. Avec l'EDTA (Exemple 7), il apparaît que le strontium, est l'élément le plus présent dans le rétentat, suivi ensuite par le sodium et le césium. Il ne s'agit pas, dans ce document, de séparer des lanthanides ou des actinides entre eux, ni des lanthanides et des actinides.

Le brevet français N° 2 751 336 divulgue des polyphénols linéaires utilisés comme agents complexants dans des procédés du type complexation-nanofiltration permettant de séparer le sodium du césium, dans des effluents aqueux provenant du retraitement d'éléments combustible nucléaire, usés. Là encore, il n'est pas question de séparation de terres rares et d'actinides.

L'article de GAUBERT et al paru dans Sep. Science et Techno., 32(14), 2309-2320, 1997, présente la séparation de césium dans des effluents radioactifs, par complexation-nanofiltration, à l'aide d'un complexant du type résorcinarène.

Force est donc de constater qu'à ce jour il n'existe pas de procédé de séparation des lanthanides et/ou actinides par complexation-nanofiltration.

Par ailleurs s'agissant des terres rares et des actinides mineurs, il est à souligner que les protagonistes industriels du domaine technique concerné restent dans l'attente d'un procédé de séparation simple, économique, sélectif et performant.

Dans un tel contexte, l'un des objectifs essentiels de la présente invention est de fournir un procédé pour séparer en milieu aqueux, les lanthanides entre eux et/ou les lanthanides des actinides et/ou les actinides entre eux, un tel procédé se devant d'être apte à satisfaire le besoin existant et à remédier aux inconvénients des techniques de séparation par précipitation ou extraction liquide-liquide.

Un autre objectif essentiel de la présente invention est de fournir un procédé de séparation des lanthanides ou actinides entre eux et/ou des lanthanides vis-à-vis des actinides, ce procédé se devant d'être applicable à la production de terres rares ainsi qu'au retraitement des déchets nucléaires notamment ceux issus des opérations de traitement-recyclage des combustibles nucléaires radioactifs usés et, en particulier, ceux contenant, d'une part, des radionucléides à vie longue que sont les actinides mineurs, et d'autre part des terres rares.

Un autre objectif essentiel de l'invention est de fournir de nouveaux complexants susceptibles d'être utilisés dans des procédés de séparation par complexation-nanofiltration.

**EXPOSE DE L'INVENTION :**

Ces objectifs, parmi d'autres, sont atteints par la présente invention qui concerne, tout d'abord, un procédé pour séparer, en milieu aqueux, les lanthanides entre eux et/ou les lanthanides des actinides et/ou les actinides entre eux et/ou d'autres métaux de transition, caractérisé en ce qu'il comprend les étapes essentielles suivantes :

- 1 - traitement du milieux aqueux à l'aide d'au moins un ligand choisi dans le groupe comprenant l'acide EthylèneDiamineTétraAcétique (EDTA) et/ou des polyacides aminés linéaires ou cycliques, de préférence linéaires de formule (**I**) suivante :

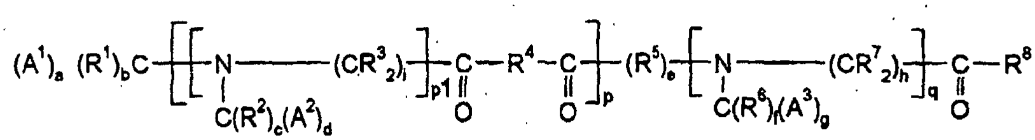

**(I)**

dans laquelle :

- a = 0 ou 1 et b = 2 ou 3 ;
- c = 2 ou 3 et d = 0 ou 1 ;
- p = 0 à 3, de préférence 2
- p1 = 1 à 4, de préférence 2 ou 3
- e = 0 ou 1,

- q = 1 à 4, de préférence 2 ou 3
- f = 2 ou 3 et g = 0 ou 1
- h et i, identiques ou différents, représentent chacun 1, 2 ou 3, de préférence 1 ou 2

$A^1$, $A^2$, $A^3$ sont identiques ou différents entre eux et correspondent à un groupement acide monovalent, de préférence sélectionné dans le groupe comportant : - COOR, $-PO_3R'$, $-SO_3R''$, avec R, R', R'' = H ou cation ;

- les $R^1$, sont identiques ou différents entre eux et correspondent :

  Δ H,
  Δ alkyle en $C_1$-$C_{10}$ ou,
  Δ

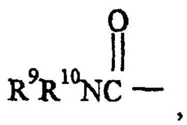

avec a = 0 et $R^9$, $R^{10}$ identiques ou différents et correspondant chacun à l'hydrogène ou à un radical monovalent hydrophile sélectionné de préférence parmi les restes hydrocarbonés aminés et/ou (poly) hydroxylés et/ou alcoxylés et/ou (poly)étherifiés, ces restes étant de préférence du type (cyclo)alkyle, aralkyle, alkylaryle, (cyclo)alcényle, aralcényle, alcénylaryle, aryle ;
$R^9$, $R^{10}$ correspondant plus préférentiellement encore chacun à un hydroxyalkyle en $C_1$-$C_{10}$, un alcoxyle en $C_1$-$C_{10}$, un polyol avantageusement un saccharide hydrogéné ;

- les $R^2$ sont identiques ou différents entre eux,
  les $R^3$ sont identiques ou différents entre eux,
  les $R^6$ sont identiques ou différents entre eux,
  les $R^7$ sont identiques ou différents entre eux,
  $R^2$, $R^3$, $R^6$, $R^7$ sont identiques ou différents entre eux et correspondent à H ou à un alkyle en $C_1$-$C_{10}$;
- les $R^4$ sont identiques ou différents entre eux et correspondent à un groupement divalent hydrophile sélectionné, de préférence, parmi les groupements aminés et/ou hydroxylés aromatiques, les groupements aminés et/ou hydroxylés aromatiques et alkyles, les groupements aminés et/ou hydroxylés aromatiques et (cyclo) alkylèniques, ou les groupements aminés et/ou hydroxylés (cyclo)alkyléniques ;
  ce groupement pouvant comporter des alcoxyles et/ou des (poly)éthers ; $R^4$ étant préférentiellement un groupe

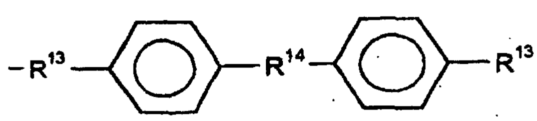

avec $R^{13}$ représentant un groupe amino et $R^{14}$ représentant un ($C_1$-$C_4$)alkylène ;
- le groupement divalent $R^5$ représentant un alkylène, de préférence $CH_2$, ou un groupement répondant à la même définition que $R^4$,
- et le groupement $R^8$ correspondant à un hydroxyle, à $A^4$ répondant à la même définition que $A^1$, $A^2$, $A^3$, à l'hydrogène ou à - $NR^9R^{10}$ avec $R^9$, $R^{10}$ identiques ou différents entre eux et représentant un radical monovalent hydrophile sélectionné, de préférence, parmi les restes hydrocarbonés aminés et/ou (poly)hydroxylés et/ou alcoxylés et/ou (poly)étherifiés, ces restes étant de préférence de type (cyclo)-alkyle aralkyle, alkylaryle, (cyclo)alcényle, aralcényle, alcénylaryle, aryle ;
  $R^8$ étant plus préférentiellement encore un hydroxyalkyle en $C_1$-$C_{10}$, un alcoxyle en $C_1$-$C_{10}$ ou un polyol. avantageusement un saccharide hydrogéné,

- 2 - (nano)filtration de la solution aqueuse traitée à l'aide du ligand (**I**), sous une pression transmembranaire supérieure ou égale à 0,01 MPa, de préférence supérieure ou égale à 0,1 MPa, et plus préférentiellement encore comprise entre 0,2 et 1,0 MPa,
de manière à recueillir, d'une part, un rétentat enrichi en au moins une espèce de lanthanides, d'actinides ou

d'autres métaux de transition, cette espèce étant celle au moins en partie complexée au ligand (**I**), et d'autre part, un perméat appauvri en ladite espèce ;

- 3 - éventuellement récupération des complexes ligand/espèce(s) à séparer dans le rétentat, et traitement de ces complexes à l'aide d'agent(s) de décomplexation approprié(s), de façon à recueillir, d'une part, les ligands et, d'autre part, le (ou les) espèce(s) visée(s).

Le procédé selon l'invention relève de la combinaison entre un procédé de complexation sélective d'actinides et/ou de lanthanides avec un procédé de séparation par membrane, et plus particulièrement de [nano]filtration.

Il va de soi que le procédé selon l'invention n'est pas limité à la [nano]filtration stricto sensu mais englobe toute technique membranaire de séparation dans laquelle on a recours à une membrane semiperméable formant barrière entre deux milieux homogènes, opposant une inégale résistance au passage de différents constituants d'un fluide (suspension, soluté, solvant). La force permettant le franchissement de la barrière pour une partie desdits constituants, peut résulter d'un gradient de pression (microfiltration, ultrafiltration, nanofiltration, osmose inverse), d'un gradient de concentration (dialyse ou d'un gradient de potentiel électrique (électrodialyse).

Les avantages essentiels du procédé selon l'invention sont : sa simplicité de mise en oeuvre, son caractère économique, sa sélectivité et le fait qu'il ne génère pas de déchets solides secondaires imposant un retraitement lourd. En effet, ce procédé ne fait intervenir que des substances constituées uniquement de carbone, d'hydrogène, d'oxygène et d'azote. De telles substances organiques sont aisément dégradables en gaz inoffensifs dont les rejets n'ont pas de répercussions néfastes sur l'environnement.

Ces résultats avantageux ont pu être obtenus grâce à la sélection par les inventeurs, de manière méritante et judicieuse, d'une classe spécifique de ligands aptes à complexer des lanthanides et des actinides ou d'autres métaux de transition, avec des pouvoirs complexants suffisamment différents vis-à-vis des divers lanthanides et actinides ou autres métaux de transition pour permettre une bonne séparation entre chacune de ces espèces.

Les ligands/complexants sélectionnés sont des polyacides aminés linéaires ou cycliques, de préférence linéaires, parmi lesquels figurent les complexants connus que sont l'acide éthylènediamine tétraacétique (EDTA) et l'acide DiéthylèneTriaminePenta-Acétique (DTPA).

Suivant une modalité avantageuse de l'invention, pour séparer deux lanthanides ou deux actinides ou un lanthanide et un actinide ou d'autres métaux de transition dans un milieu aqueux, de préférence une solution aqueuse, on procède à la complexation sélective d'un ou plusieurs ion(s) du (ou des) métal(aux) lanthanides ou actinides à séparer.

Il est clair que les complexes *ligand/espèce à séparer* présentant la plus forte masse et le plus grand encombrement stérique, sont ceux qui ont le plus de difficultés à franchir la membrane de nanofiltration, sous l'effet de la différence de pression régnant de part et d'autre de cette membrane. Les ions non complexés passent au travers de la membrane aisément et sont donc séparés des ions complexés, sans utilisation de solvant et en une seule étape.

Dans l'étape 3 éventuelle, les ions complexés peuvent après filtration, être libérés ou décomplexés, par exemple, en milieu basique et par précipitation de leur hydroxyde ou par passage sur résine échangeuse d'ions spécifique. Dans le cadre de cette étape 3, il est avantageux de prévoir conformément à l'invention une élimination du solvant - en l'occurrence de l'eau - par exemple par évaporation, pour permettre la récupération des ions séparés.

L'équipement requis pour la mise en oeuvre du procédé selon l'invention est relativement limité puisqu'il suffit d'un réacteur de complexation, d'une pompe et d'une membrane de nanofiltration.

Pour optimiser la séparation, il est préférable de faire en sorte qu'il y ait une grande différence entre les constantes de complexation des lanthanides/actinides avec les ligands de type polyacides aminés linéaires ou cycliques. Cela permet une complexation très sélective et donc une séparation très efficace.

Suivant une caractéristique préférée de l'invention les ligands/complexants sont des polyacides aminés linéaires de formule (**I**) donnée ci-dessus. Tous les groupes ou radicaux monovalents ou divalents auxquels il est fait référence dans cette formule (**I**), peuvent être des alkyles ou des alcényles linéaires ou ramifiés pouvant comporter dans leur chaîne un ou plusieurs atomes d'oxygène à la place des atomes de carbone (e.g. alcoxy ou (poly)éther).

Dans cette même formule (**I**), on entend par groupe "aryle", un groupe dérivé d'un motif hydrocarboné aromatique comportant un ou plusieurs noyaux aromatiques pouvant être substitué ou non par des groupements OH, alkyle ou des hydroxyalkyles par enlèvement d'un atome d'hydrogène d'un carbone du cycle ou par enlèvement d'un atome d'hydrogène d'un des carbones d'un substituant alkyle ou hydroxyalkyle. A titre d'exemples, on peut citer les groupes benzyles alcools ou hydroxyalkylphénols.

Dans cette formule (**I**), on entend également par groupe "cydoalkylène", un groupe divalent dérivé d'un hydrocarbocyclique substitué ou non par des chaînes alkyles ou hydroxyalkyles par enlèvement d'un atome d'hydrogène, d'un atome de carbone du cycle. A titre d'exemple, on peut citer le groupe cyclohexylène.

Par "hydrocarboné", on entend au sens de l'invention tout groupement comportant notamment des atomes de carbone et des atomes d'hydrogène.

Quand on fait référence à des alkyles, des alcoxyles ou des alcényles en $C_1$-$C_{10}$, il s'agit plus spécialement de radicaux

en $C_2$, $C_3$, ou $C_4$.
Avantageusement les groupements hydrophiles qui peuvent représenter $R^8$,$R^9$ ou $R^{10}$ sont des polyhydroxyalkyles, de préférence, des saccharides hydrogénés, plus préférentiellement encore, un reste sorbitol ou des chaînes polyéthers de préférence polyéthylèneglycol ou polypropylèneglycol.

Avantageusement, cette formule (**I**) englobe des polyacides aminés linéaires connus que sont l'EDTA et le DTPA. (p = 0, q = 2 ou 3 ; b = 2, f = 2 ; e = 0 ; $A^1$, $A^3$ = COOH ; $R^1$, $R^6$, $R^7$ = H ; $R^8$ = OH).
Suivant une variante, les ligands/complexants peuvent être des polyacides aminés cycliques comme, par exemple, les DOTA qui sont des polyaminocarboxylates cycliques.

L'une des caractéristiques essentielles du procédé selon l'invention est d'avoir choisi des ligands/complexants notamment ceux de formule (**I**) dont la masse moléculaire est supérieure au seuil de coupure de la membrane de nanofiltration, de façon à permettre une rétention complète des ions complexés.

Dans une forme préférée de mise en oeuvre, le ligand/complexant est un produit de formule (**L1**) :

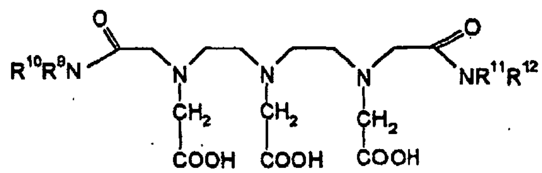

**(L1)**

dans laquelle $R^9$, $R^{10}$, $R^{11}$, $R^{12}$ sont identiques ou différents entre eux et représentent chacun un radical monovalent hydrophile répondant à la même définition que celle donnée pour $R^9$, $R^{10}$, les radicaux éthanoyle, méthoxyéthyle, sorbitoyle étant plus spécialement préférés.

Il est intéressant de souligner que le procédé selon l'invention permet non seulement la séparation d'une espèce donnée de lanthanides et/ou d'actinides et/ou d'autres métaux de transition, mais également de plusieurs espèces de ces métaux. Ainsi, suivant une disposition avantageuse de l'invention, on sépare plusieurs espèces métalliques appartenant à la famille des lanthanides et/ou des actinides, cette séparation s'opérant par complexations successives des ions de chacune de ces espèces à séparer, en choisissant le ligand sélectif idoine pour chacune d'elles (étape 1) et en mettant en oeuvre, après chaque complexation, une nanofiltration (étape 2) et une décomplexation/collecte (étape 3).

Les membranes de (nano)filtration susceptibles d'être utilisées dans le procédé de l'invention peuvent être organiques, minérales ou organo-minérales. Elles doivent présenter un seuil de coupure tel qu'elles laissent passer les ions mono-, di-, tri- et tétravalents non-complexés, et tel qu'elles retiennent les ions lanthanides ou actinides complexés par les ligands de l'invention. Le seuil de coupure d'une membrane vis-à-vis d'un soluté neutre peut être défini comme la masse molaire minimale d'un composé nécessaire pour avoir un taux de rétention de ce composé à 90 %.

Selon l'invention, le seuil de coupure approprié pour la membrane sélectionnée se définit comme suit (en g/mol) :

| | |
|---|---|
| | 100 - 5 000 |
| de préférence | 200 - 2 000 |
| et plus préférentiellement encore | 500 - 1 500 |

En pratique, le seuil de coupure peut être, par exemple, compris entre 200 et 2 000 g/mol.

Ces membranes de nanofiltration sont avantageusement réalisées à partir d'au moins un matériau choisi dans le groupe de polymères comprenant :

les polyaramides, les polysulfones sulfonés, les polybenzimidazolones, les polyfluorures de vinylidène greffés ou non, les polyamides, les esters cellulosiques, les éthers cellulosiques ou les ionomères perfluorés, les associations de ces polymères et les copolymères obtenus à partir de monomères d'au moins deux de ces polymères. Pour plus de détails sur les membranes de nanofiltration, on peut se référer à la demande internationale PCT WO - 92/06 675 qui décrit des membranes de nanofiltration organominérales comprenant une couche active d'un polymère du type polysulfone, polybenzènimidazolone, polyflurorure de vinylidène greffé et ionomère perfluoré (nafion®) - seuil de coupure 300 à 1 000 g. $mol^{-1}$. On renvoit également à la demande de brevet français N° 2 600 264 relative à des membranes organominérales comprenant un support poreux et organique et une membrane microporeuse en polymère organique tel que les polysulfones, les polyamides, les esters cellulosiques et les éthers cellulosiques.
A titre d'exemples de membranes préférées pour mettre en oeuvre le procédé de l'invention, on peut citer en particulier

les membranes commercialisées par la firme OSMONICS sous les noms de SEPA MG-17, SEPA MW-15 et SEPA BQ-01, qui possèdent une perméabilité à l'eau bidistillée comprise entre 2 et 10 $L.h^{-1}.m^{-2}.bar^{-1}$ à 25°C.

Pour mettre en oeuvre le procédé de séparation sur membrane de nanofiltration, on utilise de préférence la technique de filtration tangentielle qui limite le phénomène d'accumulation des espèces retenues à la surface de la membrane, car la circulation du rétentat provoque une forte turbulence au voisinage de la membrane. De plus, ce type de filtration permet une utilisation en continu.

Dans ce but, on peut utiliser des modules sous forme de tubes ou de plaques parallèles tels que ceux utilisés classiquement dans cette technique. On peut également utiliser des modules dans lesquels des membranes planes sont enroulées en spirales autour d'un tube perforé et creux destiné à collecter le perméat.

Ces modules peuvent être en série et/ou en parallèle, avec éventuellement des membranes différentes dans certains modules.

Pour obtenir les taux de séparation souhaités, on peut agir sur les conditions de traitement telles que le pH de la solution aqueuse à traiter, la différence de pression, la vitesse de circulation du rétentat et la température utilisée. De préférence, le pH de la solution aqueuse est dans la gamme 1 à 7, car les hydroxydes de lanthanides et d'actinides précipitent lorsque le pH est supérieur à 7.

On peut ajuster le pH des solutions à traiter par addition de NaOH ou de $HNO_3$, par exemple.

Pour la température, on peut opérer à la température ambiante ou à une température inférieure ou supérieure allant par exemple de 10 à 40°C.

Dans la première étape de ce procédé, on ajoute à la solution aqueuse à traiter le complexant hydrosoluble constitué par le dérivé de formule (**I**). La quantité de complexant ajoutée est telle qu'elle soit supérieure ou égale à un équivalent de complexant par atome de lanthanide ou d'actinide à séparer. Ces complexants forment des complexes de type 1:1.

Pour réaliser ensuite la séparation des lanthanides et/ou des actinides, on fait circuler la solution aqueuse à traiter au voisinage de la membrane de nanofiltration et on applique une différence de pression entre les deux faces opposées de la membrane, de façon à recueillir un perméat appauvri en lanthanide (ou actinide) à séparer, et un rétentat enrichi en lanthanide (ou actinide) à séparer. La différence de pression entre les deux faces opposées de la membrane peut varier dans une large gamme, mais de bons résultats sont obtenus avec une différence de pression allant de 0,2 à 0,8 MPa.

Suivant un autre de ses aspects, l'invention concerne de nouveaux complexants de formules (I'.1) à (I'.3) (voir ci après) de type polyacides aminés de formule générale (**I'**) :

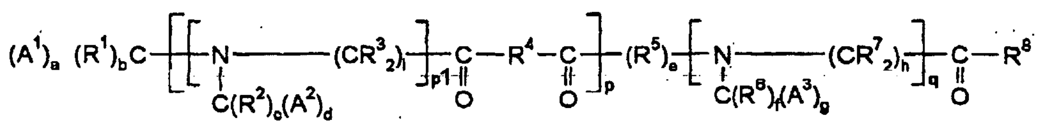

**(I')**

dans laquelle :

- a = 0 ou 1 et b = 2 ou 3 ;
- c = 2 ou 3 et d = 0 ou 1 ;
- p = 0 à 3, de préférence 2
- p1 = 1 à 4, de préférence 2 ou 3
- e = 0 ou 1,
- q = 1 à 4, de préférence 2 ou 3
- f = 2 ou 3 et g = 0 ou 1
- h et i, identiques ou différents, représentent chacun 1, 2 ou 3, de préférence 1 ou 2

$A^1$, $A^2$, $A^3$ sont identiques ou différents entre eux
et correspondent à un groupement acide monovalent, de préférence sélectionné dans le groupe comportant :
- COOR, $-PO_3R'$, $-SO_3R''$,
avec R, R', R'' = H ou cation.

- les $R^1$ sont identiques ou différents entre eux et correspondent :

Δ H,

Δ alkyle en $C_1$-$C_{10}$ ou,

Δ

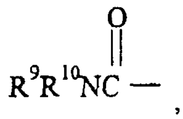

avec a = 0 et $R^9$, $R^{10}$ identiques ou différents et correspondant chacun à l'hydrogène ou à un radical monovalent hydrophile sélectionné de préférence parmi les restes hydrocarbonés aminés et/ou (poly)hydroxylés et/ou alcoxylés et/ou (poly)étherifiés, ces restes étant de préférence du type (cyclo)alkyle, aralkyle, alkylaryle, (cyclo)alcényle, aralcényle, alcénylaryle, aryle ;

$R^9$, $R^{10}$ correspondant plus préférentiellement encore chacun à un hydroxyalkyle en $C_1$-$C_{10}$, un alcoxyle en $C_1$-$C_{10}$, un polyol avantageusement un saccharide hydrogéné.

- les $R^2$ sont identiques ou différents entre eux.
- les $R^3$ sont identiques ou différents entre eux.
- les $R^6$ sont identiques ou différents entre eux.
- les $R^7$ sont identiques ou différents entre eux.

  $R^2$, $R^3$, $R^6$, $R^7$ sont identiques ou différents entre eux et correspondent à H ou à un alkyle en $C_1$-$C_{10}$ ;
- les $R^4$ sont identiques ou différents entre eux et correspondent à un groupement divalent hydrophile sélectionné, de préférence, parmi les groupements aminés et/ou hydroxylés aromatiques, les groupements aminés et/ou hydroxylés aromatiques et alkyles, les groupements aminés et/ou hydroxylés aromatiques et (cyclo)alkylèniques, ou les groupements aminés et/ou hydroxylés (cyclo)alkyléniques ;

  ce groupement pouvant comporter des alcoxyles et/ou des (poly)éthers ; $R^4$ étant préférentiellement un groupe

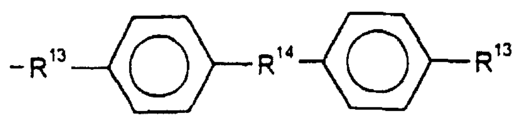

  avec $R^{13}$ représentant un groupe amino et $R^{14}$ représentant un ($C_1$-$C_4$)alkylène ;
- le groupement divalent $R^5$ représentant un alkylène, de préférence $CH_2$, ou un groupement répondant à la même définition que $R^4$, ou
- et le groupement $R^8$ correspondant à un hydroxyle, à $A^4$ répondant à la même définition que $A^1$, $A^2$, $A^3$, à l'hydrogène ou à - $NR^9R^{10}$ avec $R^9$, $R^{10}$ identiques ou différents entre eux et représentant un radical monovalent hydrophile sélectionné, de préférence, parmi les restes hydrocarbonés aminés et/ou (poly)hydroxylés et/ou alcoxylés et/ou (poly)étherifiés, ces restes étant de préférence de type (cyclo)-alkyle aralkyle, alkylaryle, (cyclo)alcényle, aralcényle, alcénylaryle, aryle ;

  $R^8$ étant plus préférentiellement encore un hydroxyalkyle en $C_1$-$C_{10}$, un alcoxyle en $C_1$-$C_{10}$ ou un polyol, avantageusement un saccharide hydrogéné,

**à l'exclusion de l'EDTA et du DTPA.**

Ces dérivés (**I'**) d'EDTA et de DTPA se sont révélés être d'excellents complexants des lanthanides, actinides et métaux de transition.

Ces complexants (**I'**) sont hydrosolubles.

L'invention concerne ainsi les complexants de formules suivantes :

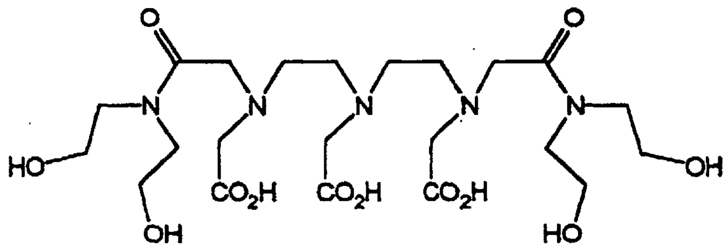

(I'.1)

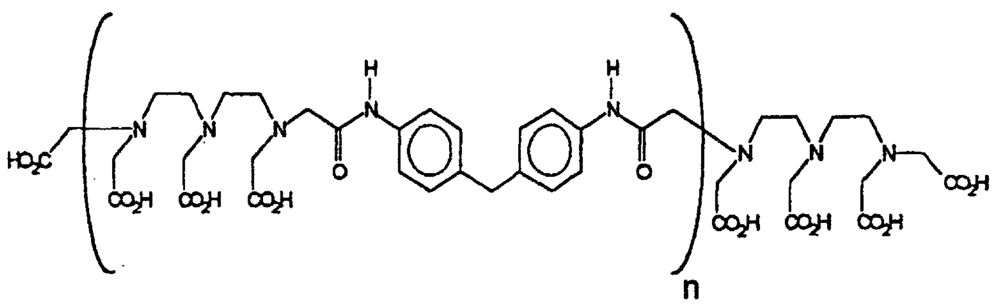

(I'.2)

- n compris entre 1 et 100, de préference entre 1 et 10.

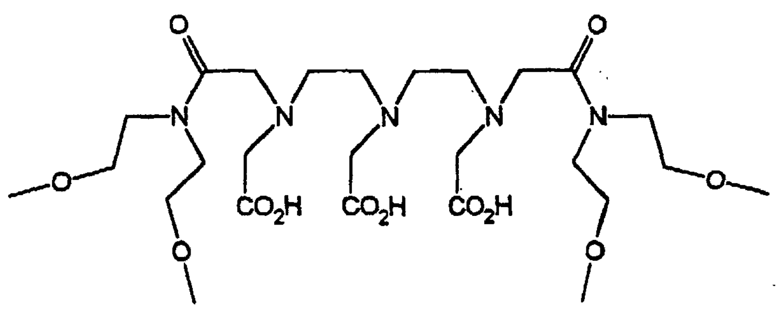

(I'3)

Enfin, l'invention vise l'application du procédé et des complexants (I'.1) à (I'.3) tels que définis ci-dessus, à la production de terres rares ou au traitement de déchets nucléaires notamment ceux issus des opérations de traitement - recyclage des combustibles nucléaires usés.

L'invention sera mieux comprise à la lumière des exemples illustratifs et non limitatifs qui suivent et qui décrivent un dispositif pour la mise en oeuvre du procédé, des synthèses de complexants/ligands et des cas concrets de mise en oeuvre du procédé à l'aide de ces complexants.

**EXEMPLES**

**BREVE DESCRIPTION DES FIGURES :**

On fait référence dans ce qui suit aux dessins annexés dans lesquels :

- la **Fig. 1** est une représentation schématique du dispositif de mise en oeuvre du procédé de séparation selon

l'invention ;

- Les **Fig. 2, 4 et 5** sont des courbes du taux de rétention en % en fonction de la concentration en complexant.
- La **Fig. 3** est une courbe de la concentration en Gd et en La dans le rétentat en fonction du rapport $\frac{\textit{volume diafiltré}}{\textit{volume initial}}$.
- Les **Fig. 6 à 8** sont des courbes du taux de rétention en fonction du rapport de la $\frac{\textit{concentration en complexant}}{\textit{concentration en espèce à séparer}}$.

**MEILLEURE MANIERE DE REALISER L'INVENTION :**

Sur la **Fig. 1,** on a représenté une installation d'un module de diafiltration tangentielle, qui comprend un réservoir **1** contenant l'effluent (milieu-solution-aqueux) **3** à traiter. Ce réservoir peut être maintenu à une température appropriée par un cryostat **5.** L'effluent à traiter est acheminé du réservoir **1** vers le module de filtration **11** par une conduite **7,** munie d'une pompe **9**. On soutire à partir de ce module **11** d'une part, le rétentat R par la conduite **13** et d'autre part, le perméat P par la conduite **15.** Les conduites **13** et **15** permettent l'acheminement de R et P, respectivement, dans le réservoir **1** et dans un récipient **24.** Les conduites **13** et **15** sont respectivement pourvues d'un débitmètre $\mathbf{13_1}$ et d'un conductimètre et d'une électrode désignés par la référence commune $\mathbf{15_1}$. Les conduites **7** et **13** sont équipées respectivement de manomètres **17** et **19** et la conduite **13** est munie en outre d'une vanne **20.** Une conduite **21** équipée d'une vanne **23,** relie la partie de la conduite **7** située en aval de la pompe à la partie supérieure du réservoir **1.** Il est également prévu une conduite **25** d'alimentation en eau (exempte d'espèce à séparer) du réservoir **1,** au fur et à mesure que le perméat P est saturé dans le récipient (**24**). Cela permet une optimisation de la filtration par recyclage du rétentat.

Dans le module de filtration **11,** on peut utiliser des membranes tubulaires ou des modules en spirale comportant deux membranes semi-perméables enroulées en spirale autour d'un tube support creux et perforé, qui délimite un tube de collection de perméat P. Ces deux membranes sont maintenues à un écartement approprié par un grillage d'espacement. En l'espèce, il s'agit d'une membrane de filtration NANOMAX 50.

Dans le procédé selon l'invention, on ajoute l'agent complexant à l'effluent **3**, à l'intérieur du réservoir **1**, avant de commencer le procédé de complexation/futration.

EXEMPLE 1 : SYNTHESE DU DTPA BIS(DIETHANOL)AMIDE **(1)**

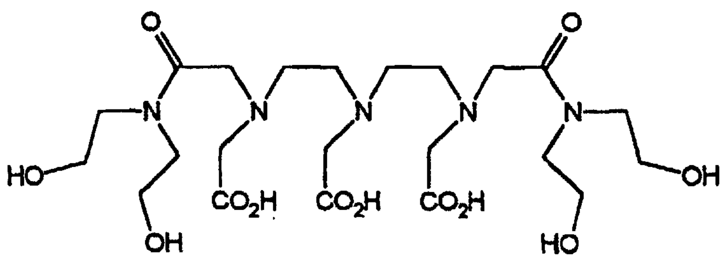

**(1)**

Dans un tricol de 500 mL, 10 grammes de dianhydride de DTPA (27,98 mmol) sont dissous dans 150 mL de DMF anhydre à 80°C sous atmosphère inerte (argon). 17 grammes de diéthanolamine (167,9 mmol) dans 50 mL de DMF sont ajoutés goutte-à-goutte et le milieu réactionnel est maintenu sous agitation pendant 48 heures. Le résidu huileux obtenu est séparé du solvant par décantation. Après dissolution de ce résidu dans le minimum d'eau, 800 mL d'acétone sont additionnés et le précipité visqueux est trituré, isolé du solvant par décantation, et purifié sur colonne de résine échangeuse d'ions Amberlite IR-120 par élution avec de l'eau distillée. On obtient après évaporation et séchage sous vide 7,98 g de produit (1) sous forme de poudre blanche (50 % de rendement).

RMN $^1H$ ($D_2O$) : 3,1 (t, J=6,25, 4H) ; 3,48-3,52 (t+s, 10H) ; 3,59 (t, J=6,2, 4H) ; 3,76 (t, J=5,2, 8H) ; 3,91 (s, 4H) ; 4,49 (s, 4H).

RMN $^{13}C$ ($D_2O$) : 50,59, 55,88, 56,62, 58,84, 59,95 ($CH_2CO_2H$ et $NCH_2CH_2N$) ; 51,75, 52,14, 60,85, 61,2 ($N(CH_2CH_2OH)_2$) ; 169,02, 172,6, 176,8 ($CO_2H$ et CO).

ES-MS : $ES^-$ : 566,3 ($[M-H]^-$) ; 282,7 ($[M-2H]^{2-}/2$]).

EXEMPLE 2: SYNTHESE DU COPOLYMERE DTPA-4,4'-METHYLENEDIANILINE **(2)**

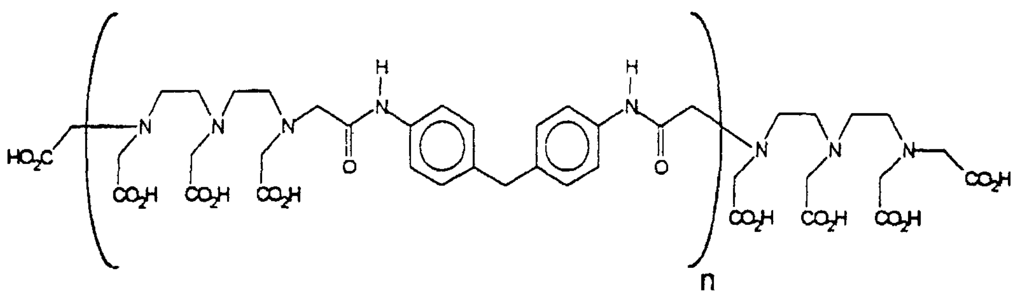

**(2)**

Dans un tricol de 250 mL, 1,179 grammes de dianhydride de DTPA (3,3 mmol) sont dissous dans 120 mL de DMF anhydre à 50°C sous atmosphère inerte (argon). 595 milligrammes de 4,4'-méthylènedianiline (3 mmol) dans 45 mL de DMF anhydre sont ajoutés goutte-à-goutte et le milieu réactionnel est maintenu sous agitation pendant 4 heures à 50°C. Le mélange réactionnel est coulé sur 500 mL d'éther diéthylique. Le précipité est filtré et lavé par 3 fois 100 mL d'éther diéthylique. Après séchage sous vide, on obtient 1,28 g de produit (**2**) sous forme de poudre blanche (72 % de rendement).
RMN $^1H$ ($D_2O$) : 7,17 (s large, 2H) ; 6,76 (m, 2H) ; 3,3-2,1 (m, 14H).
Calcul du degré de polymérisation par RMN $^1H$ : soit :
R=surface CH aromatiques/surface $CH_2$ aliphatiques=0,296
n=-18R/(20R-8)=2,57

EXEMPLE 3 : SYNTHESE DU **DTPA**BIS-(DI(2-METHOXYETHYL)AMIDE) **(3)**

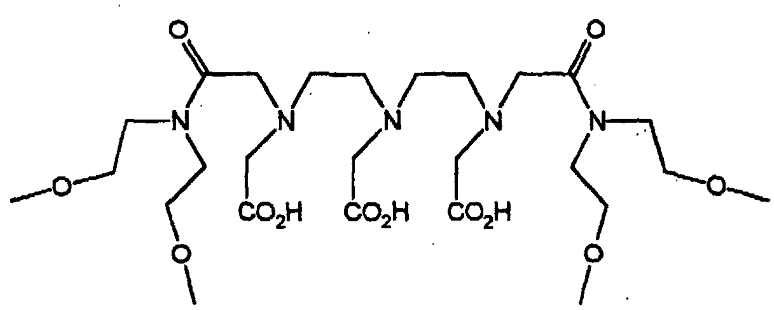

**(3)**

À 5 grammes de dianhydride de DTPA (0,014 mol), dissous dans 80 mL de DMF anhydre sous argon à 80°C, sont ajoutés goutte-à-goutte 12,4 mL de bis(2-méthoxyéthyl)amine (0,084 mol) dissous dans 40 mL de DMF anhydre. Le milieu réactionnel est maintenu sous agitation pendant 24 heures. Après concentration et addition de diéthyléther, le précipité huileux est séparé des solvants par décantation. Ce résidu est dissous dans un minimum de $CHCl_3$ et reprécipité dans $Et_2O$. Après séchage sous vide, on obtient une mousse hygroscopique (3) (6,43 g, 74 % de rendement) utilisée sans purification supplémentaire.
RMN $^1H$ ($D_2O$+NaOD) : 2,50 (t, 4H) ; 2,52 (t, 4H) ; 2,98 (s, 2H) ; 3,11 (s, 4H) ; 3,31 (s, 6H) ; 3,32 (s, 6H) ; 3,51 (s, 4H) ; 3,53-3,56 (m, 16H).
RMN $^{13}C$ ($D_2O$) : 45,94, 47,03, 47,81, 49,75, 53,69, 56,29, 57,78, 67,16, 69,56, 69,69 ($CH_2$) ; 58,63, 59,07, ($OCH_3$); 166,9, 170,5, 175,7 ($CO_2H$ et CO).
ES-MS : $ES^-$ : 622,1 ($[M-H]^-$) ; $ES^+$ : 624,3 ($[M+H]^+$) ; 646,2 ($[M+Na]^+$).

EXEMPLE 4 : SYNTHESE DU **DTPA** BIS(1-DEOXY-1-AMIDOSORBITOL) **(4)**

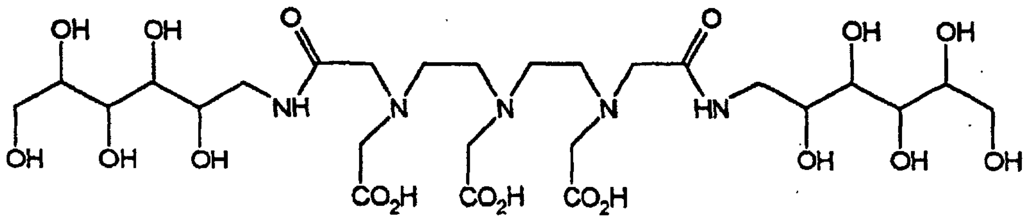

**(4)**

Dans un tricol de 500 mL, 5 grammes de dianhydride de DTPA (0,014 mole) sont dissous dans 100 mL de DMF anhydre à 70°C sous argon. 5,32 grammes de 1-deoxy-1-amino-sorbitol (0,029 mol) dissous dans 40 mL de DMSO sont ajoutés goutte-à-goutte et le milieu réactionnel est maintenu sous agitation pendant 24 heures. Le résidu visqueux issu de la réaction est séparé des solvants après décantation. Il est ensuite dissous dans un minimum d'eau et reprécipité par addition d'acétone. L'opération est répétée une deuxième fois et l'huile résiduelle est séparée par décantation et séchée sous vide pour donner une mousse blanche légèrement teintée **(4)** (6,66g, 66 % de rendement).
RMN $^{13}C$ ($D_2O$) : 42,17, 47,14, 49,61, 53,41, 56,73, 57,48, 63,16 ($CH_2$) ; 69,44, 71,08, 71,18, 71,38 (CH) ; 171,0, 178,86 ($CO_2H$ et CO).
ES-MS : $ES^+$ : 741,2 ($[M+Na]^+$).

EXEMPLE 5 :

Dans cet exemple, on traite une solution aqueuse contenant 2 mmol/L de gadolinium (Gd) et 2 mmol/L de lanthane (La) sous forme de nitrates de gadolinium et de lanthane hexahydratés. On utilise un module de filtration plan-spiralée équipé de la membrane NANOMAX 50, commercialisée par la firme MILLIPORE et d'une surface S=0,4 $m^2$. La membrane plan-spiralée NANOMAX 50 présente une perméabilité à l'eau bidistillée de 10 $L.h^{-1}.m^{-2}.bar^{-1}$ à 25°C. On ajoute à la solution aqueuse à traiter un agent complexant constitué par le DTPA.
On réalise la séparation Gd/La dans les conditions suivantes :

- pression transmembranaire $\Delta P$ = 0,5 MPa,
- température = 20°C,
- débit de rétentat = 500 L/h,
- $[NaNO_3]$=0,5 mol/L.

On réalise plusieurs expériences en ajoutant le complexant à des concentrations variant de 0 à 2 équivalents d'unité de DTPA par atome de gadolinium.
Le taux de rétention est défini par la formule suivante :

$$TR = [(C_0-C_p) / C_0] \times 100$$

où $C_0$ représente la concentration de l'élément dans l'alimentation et $C_P$ la concentration de l'élément dans le perméat.
Les résultats des expériences sont donnés dans la figure 2.
Les résultats de la figure 2 montrent que le taux de rétention du gadolinium est supérieur à celui du lanthane lorsque la solution contient entre 0 et 2 équivalents d'unité de DTPA par atome de gadolinium. La différence entre le taux de rétention du gadolinium et celui du lanthane est maximale lorsque le rapport [complexant]/[gadolinium] est égal à 1. Cette différence vaut alors 14 %.

EXEMPLE 6 :

Dans cet exemple, on traite une solution aqueuse contenant 2 mmol/L de gadolinium (Gd) et 2 mmol/L de lanthane (La) sous forme de nitrates de gadolinium et de lanthane hexahydratés. On utilise un module de filtration

plan-spiralé équipé de la membrane NANOMAX 50 d'une surface S=0,4 $m^2$. On ajoute à la solution aqueuse à traiter un agent complexant constitué par le DTPA, à hauteur de 1,1 équivalent d'unité de DTPA par atome de gadolinium. Le volume total de la solution à filtrer est de 4 litres.

On réalise la filtration de la solution de Gd et de La dans les conditions suivantes :

- pression transmembranaire $\Delta P$ = 0,5 MPa,
- température = 20°C,
- débit de rétentat = 500 L/h,
- $[NaNO_3]$=0,5 mol/L,
- pH=3,8.

Il s'agit ici d'une expérience de diafiltration, c'est-à-dire que le perméat est évacué du réservoir où se trouve la solution à filtrer, et une solution aqueuse ne contenant ni Gd ni La est ajoutée dans le même temps à la solution à traiter. Cette configuration permet de travailler avec un volume constant dans le réservoir contenant la solution à filtrer.

Les résultats des expériences sont donnés dans la figure 3.

Les résultats de la figure 3 montrent que la concentration en gadolinium dans le rétentat baisse beaucoup moins vite que celle du lanthane. Au terme de cette expérience, c'est-à-dire lorsque le rapport du volume total diafiltré sur le volume du rétentat a atteint la valeur de 20, on a éliminé 88 % du lanthane initial et seulement 8 % du gadolinium initial.

EXEMPLE 7 :

Dans cet exemple, on traite une solution aqueuse contenant 2 mmol/L de gadolinium (Gd) et 2 mmol/L de lanthane (La) sous forme de nitrates de gadolinium et de lanthane hexahydratés. On utilise un module de filtration plan équipé de la membrane SEPA MQ-09 (d'une surface S=0,015 $m^2$). La membrane plane SEPA MQ-09 présente une perméabilité à l'eau bidistillée de 4,5 $L.h^{-1}.m^{-2}.bar^{-1}$ à 25°C. On ajoute à la solution aqueuse à traiter un agent complexant constitué par le complexant (3) de l'exemple 3.

On réalise la séparation Gd/La dans les conditions suivantes

- pression transmembranaire $\Delta P$ = 0,6 MPa,
- température = 20°C,
- débit de rétentat = 80 L/h,
- $2<pH<4$,
- $[NaNO_3]$=0,1 mol/L

On réalise plusieurs expériences en ajoutant le complexant à des concentrations variant de 0 à 2 équivalents d'unité complexante de complexant **(3)** par atome de gadolinium.

Les résultats des expériences sont donnés la figure 4.

Les résultats de la figure 4 montrent que le taux de rétention du gadolinium est supérieur à celui du lanthane dès que l'on ajoute du complexant **(3)** à la solution à traiter. La différence entre le taux de rétention du gadolinium et celui du lanthane est maximale lorsque le rapport [complexant]/[gadolinium] est égal à 1. Cette différence vaut alors 11 %.

EXEMPLE 8 :

Dans cet exemple, on traite une solution aqueuse contenant 2 mmol/L de gadolinium (Gd) et 2 mmol/L de lanthane (La) sous forme de nitrates de gadolinium et de lanthane hexahydratés. On utilise un module de filtration plan équipé de la membrane SEPA MQ-09 (d'une surface S=0,015 $m^2$). La membrane plane SEPA MQ-09 présente une perméabilité à l'eau bidistillée de 4,5 $L.h^{-1}.m^{-2}.bar^{-1}$ à 25°C. On ajoute à la solution aqueuse à traiter un agent complexant constitué par le complexant **(2)** de l'exemple 2.

On réalise la séparation Gd/La dans les conditions suivantes

- pression transmembranaire $\Delta P$ = 0,6 MPa,
- température = 20°C,
- débit de rétentat = 80 L/h,
- $3<pH<5$,
- $[NaNO_3]$=0,1 mol/L

On réalise plusieurs expériences en ajoutant le complexant à des concentrations variant de 0 à 1,5 équivalents d'unité complexante de complexant **(2)** par atome de gadolinium.

Les résultats des expériences sont donnés la figure 5.

Les résultats de la figure 5 montrent que le taux de rétention du gadolinium est supérieur à celui du lanthane dès que l'on ajoute du complexant **(2)** à la solution à traiter. La différence entre le taux de rétention du gadolinium et celui du lanthane est maximale lorsque la concentration totale en complexant **(2)** vaut 0,7 mmol/L. Cette différence vaut alors 21 %.

EXEMPLE 9 :

Dans cet exemple, on traite une solution aqueuse contenant 2 mmol/L de gadolinium (Gd) et 2 mmol/L de lanthane (La) sous forme de nitrates de gadolinium et de lanthane hexahydratés. On utilise un module de filtration plan équipé de la membrane SEPA MG-17 (d'une surface S=0,015 $m^2$). La membrane plane SEPA MG-17 présente une perméabilité à l'eau bidistillée de 2,5 $L.h^{-1}.m^{-2}.bar^{-1}$ à 25°C. On ajoute à la solution aqueuse à traiter un agent complexant constitué par le DTPA.

On réalise la séparation Gd/La dans les conditions suivantes :

- pression transmembranaire $\Delta P$ = 0,6 MPa,
- température = 20°C,
- débit de rétentat = 80 L/h,
- pH = 3,8.

On réalise plusieurs expériences en ajoutant le complexant à des concentrations variant de 0 à 2 équivalents d'unité DTPA par atome de gadolinium.

Les résultats des expériences sont donnés la figure 6.

Les résultats de la figure 6 montrent que le taux de rétention du gadolinium est supérieur à celui du lanthane lorsque la solution contient entre 0 et 2 équivalents d'unité de DTPA par atome de gadolinium. La différence entre le taux de rétention du gadolinium et celui du lanthane est maximale lorsque le rapport [complexant]/[gadolinium] est égal à 1. Cette différence vaut alors 45 %.

EXEMPLE 10 :

Dans cet exemple, on traite une solution aqueuse contenant 2 mmol/L de gadolinium (Gd) et 2 mmol/L de lanthane (La) sous forme de nitrates de gadolinium et de lanthane hexahydratés. On utilise un module de filtration plan équipé de la membrane SEPA MG-17 (d'une surface S=0,015 $m^2$). La membrane plane SEPA MG-17 présente une perméabilité à l'eau bidistillée de 2,5 $L.h^{-1}.m^{-2}.bar^{-1}$ à 25°C. On ajoute à la solution aqueuse à traiter un agent complexant constitué par le complexant (1) de l'exemple 1.

On réalise la séparation Gd/La dans les conditions suivantes

- pression transmembranaire $\Delta P$ = 0,6 MPa,
- température = 20°C,
- débit de rétentat = 80 L/h,
- pH = 3,8.

On réalise plusieurs expériences en ajoutant le complexant à des concentrations variant de 0 à 2 équivalents d'unité de complexant **(1)** par atome de gadolinium.

Les résultats des expériences sont donnés la figure 7.

Les résultats de la figure 7 montrent que le taux de rétention du gadolinium est supérieur à celui du lanthane lorsque la solution contient entre 0 et 2 équivalents d'unité de complexant **(1)** par atome de gadolinium. La différence entre le taux de rétention du gadolinium et celui du lanthane est maximale lorsque le rapport [complexant]/[gadolinium] est égal à 0,8. Cette différence vaut alors 82 %.

EXEMPLE 11 :

Dans cet exemple, on traite une solution aqueuse contenant 2 mmol/L de lanthane (La) et 2 mmol/L d'uranyle ($UO_2$) sous forme de nitrates de lanthane et d'uranyle hexahydratés. On utilise un module de filtration plan équipé de la membrane SEPA MG-17 (d'une surface S=0,015 $m^2$). La membrane plane SEPA MG-17 présente une perméabilité à l'eau bidistillée de 2,5 $L.h^{-1}.m^{-2}.bar^{-1}$ à 25°C. On ajoute à la solution aqueuse à traiter un agent complexant constitué

par le complexant (1) de l'exemple 1.

On réalise la séparation La/$UO_2$ dans les conditions suivantes :

- pression transmembranaire $\Delta P$ = 0,6 MPa,
- température = 20°C,
- débit de rétentat = 80 L/h,
- pH = 3,8.

On réalise plusieurs expériences en ajoutant le complexant à des concentrations variant de 0 à 2 équivalents d'unité de complexant **(1)** par atome de lanthane.

Les résultats des expériences sont donnés la figure 8.

Les résultats de la figure 8 montrent que le taux de rétention du lanthane est supérieur à celui de l'uranyle lorsque la solution contient entre 0 et 2 équivalents d'unité de complexant **(1)** par atome de lanthane. La différence entre le taux de rétention du lanthane et celui de l'uranyle est maximale lorsque le rapport [complexant]/[lanthane] est égal à 1. Cette différence vaut alors 54 %.

EXEMPLE 12 :

Dans cet exemple, on traite une solution aqueuse contenant 1 mmol/L de lanthane (La) et 36 nmol/L d'américium ($^{241}$ Am), soit un rapport molaire [La] / [Am] = 27777.

On utilise un module de filtration plan équipé de la membrane SEPA MG-17 (d'une surface S = 0,015 $m^2$). La membrane plane SEPA MG-17 présente une perméabilité à l'eau bidistillée de 2,5 $L.h^{-1}.m^{-2}.bar^{-1}$ à 25°C. On ajoute à la solution aqueuse à traiter un agent complexant constitué par le complexant (1) de l'exemple 1.

On réalise la séparation La/Am dans les conditions suivantes :

- pression transmembranaire $\Delta P$ = 0,35 MPa,
- température = 38°C,
- débit de rétentat = 200 L/h,
- pH = 3,8.

On réalise plusieurs expériences en ajoutant le complexant à des concentrations variant de 0 à 33,3 équivalents d'unité de complexant **(1)** par atome d'américium.

Les résultats des expériences sont donnés dans le tableau suivant :

| Concentration en ligand (nmol/L) | 0 | 120 | 1200 |
|---|---|---|---|
| Rapport [ligand] / [Am] | 0 | 3,3 | 33,3 |
| [La] perméat (mg / L) | 123,6 | 125 | 129,4 |
| [Am] perméat (kBq/L) | 1100 | 900 | 650 |

Le dosage de l'américium 241 a été effectué par spectrométrie alpha. Le dosage du lanthane a été réalisé par ICP-AES. Les résultats du tableau ci-dessus montrent que la concentration de l'américium dans les fractions de perméat baisse lors de l'ajout du ligand **(1)**. Lorsque le rapport [complexant] /[américium] est égal à 33,3, le taux de rétention de l'américium vaut 41 %.

Cet exemple montre que l'on peut, par ajout de complexant **(1)**, augmenter fortement la rétention de l'américium sans influencer notablement la rétention du lanthane. D'après ces chiffres, il faudrait un rapport [ligand] / [Am] de l'ordre de 500 pour obtenir une rétention de 92 % de l'américium sans affecter notablement la rétention du lanthane (rétention du lanthane inférieure à 2 %).

## Revendications

**1.** Procédé pour séparer, en milieu aqueux, les lanthanides entre eux et/ou les lanthanides des actinides et/ou les actinides entre eux et/ou d'autres métaux de transition, **caractérisé en ce qu'**il comprend les étapes essentielles suivantes :

- 1 - traitement du milieux aqueux à l'aide d'au moins un ligand choisi dans le groupe comprenant l'acide EthylèneDiamineTétraAcétique (EDTA) et/ou des polyacides aminés linéaires ou cycliques, de préférence linéaires de formule (**I**) suivante :

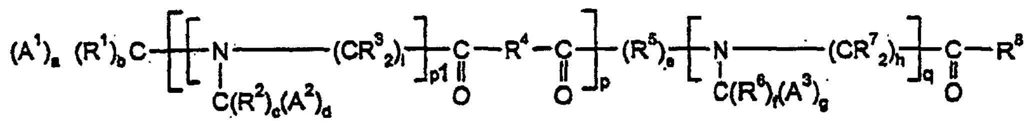

(I)

dans laquelle :

- a = 0 ou 1 et b = 2 ou 3 ;
- c = 2 ou 3 et d = 0 ou 1 ;
- p = 0 à 3, de préférence 2
- p1 = 1 à 4, de préférence 2 ou 3
- e = 0 ou 1,
- q = 1 à 4, de préférence 2 ou 3
- f = 2 ou 3 et g = 0 ou 1
- h et i, identiques ou différents, représentent chacun 1, 2 ou 3, de préférence 1 ou 2

$A^1$, $A^2$, $A^3$ sont identiques ou différents entre eux
et correspondent à un groupement acide monovalent, de préférence sélectionné dans le groupe comportant :
$-COOR$, $-PO_3R'$, $-SO_3R''$,
avec R, R', R" = H ou cation ;

- les $R^1$ sont identiques ou différents entre eux et correspondent :

    Δ H,
    Δ allyle en $C_1$-$C_{10}$ ou,
    Δ

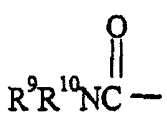

,

avec a = 0 et $R^9$, $R^{10}$ identiques ou différents et correspondant chacun à l'hydrogène ou à un radical monovalent hydrophile sélectionné de préférence parmi les restes hydrocarbonés aminés et/ou (poly) hydroxylés et/ou alcoxylés et/ou (poly)étherifiés, ces restes étant de préférence du type (cyclo)alkyle, arancyle, alkylaryle, (cyclo)alcényle, aralcényle, alcénylaryle, aryle ;
$R^9$, $R^{10}$ correspondant plus préférentiellement encore chacun à un hydroxyalkyle en $C_1$-$C_{10}$, un alcoxyle en $C_1$-$C_{10}$, un polyol avantageusement un saccharidé hydrogéné ;

- les $R^2$ sont identiques ou différents entre eux,
  les $R^3$ sont identiques ou différents entre eux,
  les $R^6$ sont identiques ou différents entre eux,
  les $R^7$ sont identiques ou différents entre eux,
  $R^2$, $R^3$, $R^6$, $R^7$ sont identiques ou différents entre eux et correspondent à
  H ou à un alkyle en $C_1$-$C_{10}$ ;
- les $R^4$ sont identiques ou différents entre eux et correspondent à un groupement divalent hydrophile sélectionné, de préférence, parmi les groupements aminés et/ou hydroxylés aromatiques, les groupements aminés et/ou hydroxylés aromatiques et alkyles, les groupements aminés et/ou hydroxylés aromatiques et (cyclo)alkylèniques, ou les groupements aminés et/ou hydroxylés (cyclo)alkyléniques ;
  ce groupement pouvant comporter des alcoxyles et/ou des (poly)éthers ; $R^4$ étant préférentiellement un groupe

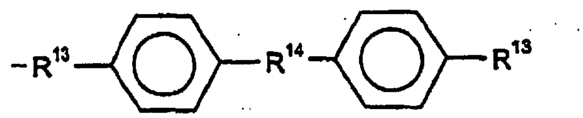

avec $R^{13}$ représentant un groupe amino et $R^{14}$ représentant un ($C_1$-$C_4$)alkylène ;

- le groupement divalent $R^5$ représentant un alkylène, de préférence $CH_2$, ou un groupement répondant à la même définition que $R^4$,
- et le groupement $R^8$ correspondant à un hydroxyle, à $A^4$ répondant à la même définition que $A^1$, $A^2$, $A^3$, à l'hydrogène ou à - $NR^9$ $R^{10}$ avec $R^9$, $R^{10}$ identiques ou différents entre eux et représentant un radical monovalent hydrophile sélectionné, de préférence, parmi les restes hydrocarbonés aminés et/ou (poly) hydroxylés et/ou alcoxylés et/ou (poly)étherifiés, ces restes étant de préférence de type (cyclo)-alkyle aralkyle, alkylaryle, (cyclo)alcényle, aralcényle, alcénylaryle, aryle ; $R^8$ étant plus préférentiellement encore un hydroxyalkyle en $C_1$-$C_{10}$, un alcoxyle en $C_1$-$C_{10}$ ou un polyol, avantageusement un saccharide hydrogéné,

- 2 - filtration sur membrane semiperméable, notamment nanofiltration de la solution aqueuse traitée à l'aide du ligand (**I**), sous une pression transmembranaire supérieure ou égale à 0,01 MPa, de préférence supérieure ou égale à 0,1 MPa, et plus préférentiellement encore comprise entre 0,2 et 1,0 MPa, de manière à recueillir, d'une part, un rétentat enrichi en au moins une espèce de lanthanides, d'actinides ou d'autres métaux de transition, cette espèce étant celle au moins en partie complexée au ligand (**I**), et d'autre part, un perméat appauvri en ladite espèce ;

- 3 - éventuellement récupération des complexes ligand/espèce(s) à séparer dans le rétentat, et traitement de ces complexes à l'aide d'agent(s) de décomplexation approprié(s), de façon à recueillir, d'une part, les ligands et, d'autre part, le (ou les) espèce(s) visée(s).

**2.** Procédé selon la revendication 1, **caractérisé en ce que** l'on procède à une complexation sélective des ions du (ou des) métal(aux) à séparer.

**3.** Procédé selon la revendication 1 ou 2, **caractérisé en ce que** l'on met en oeuvre des ligands (I) de masse moléculaire supérieure au seuil de coupure de la membrane de nanofiltration.

**4.** Procédé selon la revendication 1 ou la revendication 2, **caractérisé en ce que** l'on met en oeuvre un ligand de formule (**I.1**) :

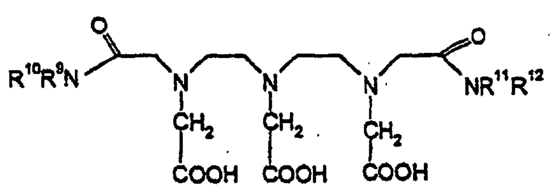

(I.1)

dans laquelle $R^9$, $R^{10}$, $R^{11}$, $R^{12}$ sont identiques ou différents entre eux et représentent chacun un radical monovalent hydrophile répondant à la même définition que celle donnée pour $R^9$, $R^{10}$ dans la revendication 1, les radicaux éthanoyle, méthoxyéthyle, sorbitoyle étant plus spécialement préférés.

**5.** Procédé selon l'une quelconque des revendications 1 à 4, **caractérisé en ce que** l'on sépare plusieurs espèces métalliques appartenant à la famille des lanthanides et/ou des actinides, cette séparation s'opérant par complexations successives des ions de chacune de ces espèces à séparer, en choisissant le ligand sélectif idoine pour chacune d'elles (étape 1) et en mettant en oeuvre, après chaque complexation, une nanofiltration (étape 2) et une décomplexation/collecte (étape 3).

**6.** Procédé selon l'une quelconque des revendications 1 à 5, **caractérisé en ce que** l'on utilise une membrane de nanofiltration réalisée à partir d'au moins un matériau choisi dans le groupe de polymères comprenant :

les polyaramides, les polysulfones sulfonés, les polybenzimidazolones, les polyfluorures de vinylidène greffés

ou non, les polyamides, les esters cellulosiques, les éthers cellulosiques ou les ionomères perfluorés, les associations de ces polymères et les copolymères obtenus à partir de monomères d'au moins deux de ces polymères.

**7.** Procédé selon l'une quelconque des revendications 1 à 6, **caractérisé en ce que** la membrane sélectionnée possède un seuil de coupure exprimé en g/mol qui se définit comme suit :

| | |
|---|---|
| | 100 - 5 000 |
| de préférence | 200 - 2 000 |
| et plus préférentiellement encore | 500 - 1 500 |

**8.** Procédé selon l'une quelconque des revendications 1 à 7, **caractérisé en ce que** l'on fixe le pH du milieu, de préférence, de la solution aqueuse constituant le milieu de complexation/séparation, entre 1 à 6.

**9.** Complexants de formules suivantes :

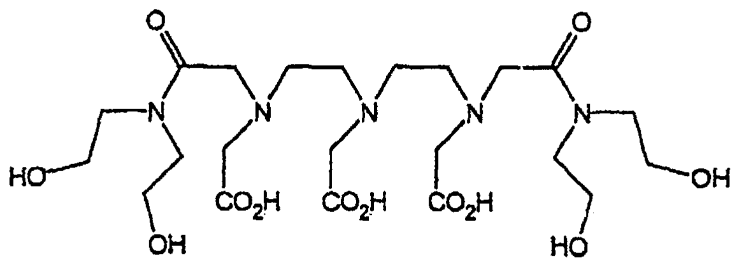

(I'.1)

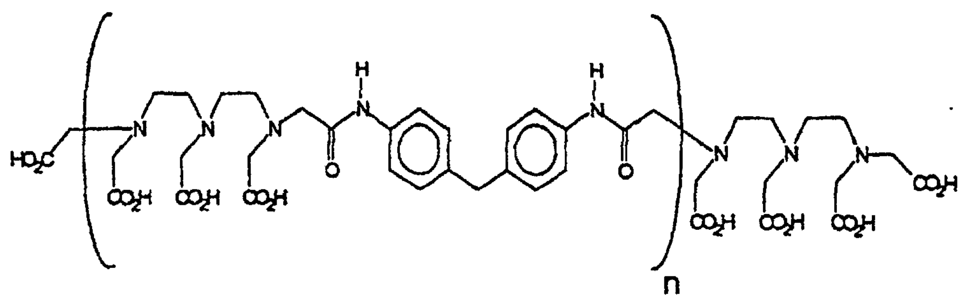

(I'.2)

- n compris entre 1 et 100, de préférence entre 1 et 10.

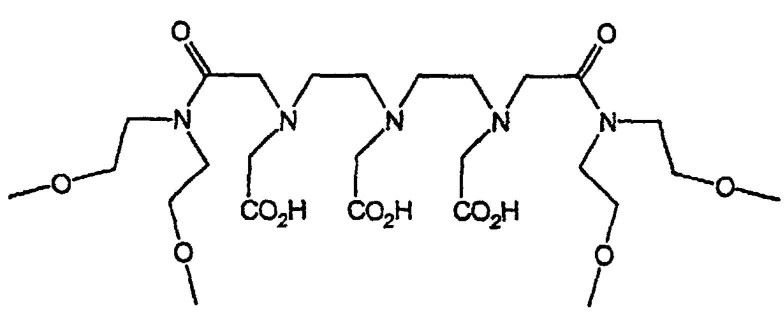

(I'3)

**10.** Application du procédé selon l'une quelconque des revendications 1 à 8, et des complexants selon la revendication 9, à la production de terres rares ou au traitement de déchets nucléaires notamment ceux issus des opérations de traitement - recyclage des combustibles nucléaires usés.

**Patentansprüche**

**1.** Verfahren zum Trennen, in wässrigem Medium, von Lanthanoiden untereinander und/oder Lanthanoiden von Actinoiden und/oder Actinoiden untereinander und/oder anderen Übergangsmetallen, **dadurch gekennzeichnet, dass** es die folgenden wesentlichen Schritte umfasst:

1) Behandlung des wässrigen Mediums mit Hilfe wenigstens eines Liganden, ausgewählt aus der Gruppe umfassend Ethylendiamintetraessigsäure (EDTA) und/oder lineare oder cyclische Polyaminosäuren, bevorzugt lineare der folgenden Formel (I):

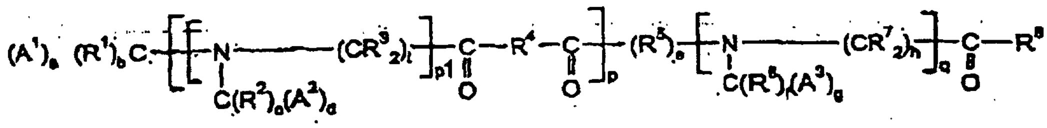

(I)

worin
a = 0 oder 1 und b = 2 oder 3;
c = 2 oder 3 und d = 0 oder 1;
p = 0 bis 3, bevorzugt 2
p1 = 1 bis 4, bevorzugt 2 oder 3
e = 0 oder 1,
q = 1 bis 4, bevorzugt 2 oder 3
f = 2 oder 3 und g = 0 oder 1
h und i, gleich oder verschieden, jeweils 1, 2 oder 3 darstellen, bevorzugt 1 oder 2,
$A^1$, $A^2$, $A^3$ gleich oder verschieden sind und einer einwertigen Säuregruppe entsprechen, bevorzugt ausgewählt aus der Gruppe umfassend:
$-COOR$, $-PO_3R'$, $-SO_3R''$,
mit R, R', R'' = H oder Kation;
die $R^1$ gleich oder verschieden sind und entsprechen:

- Δ H,
- Δ $C_1$-$C_{10}$-Alkyl oder,
- Δ

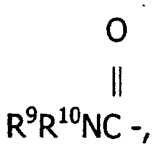

mit a = 0 und $R^9$, $R^{10}$, die gleich oder verschieden sind, und jeweils einem Wasserstoff oder einem hydrophilen einwertigen Radikal entsprechen, bevorzugt ausgewählt aus aminierten und/oder (poly)hydroxylierten und/oder alkoxylierten und/oder (poly)veretherten Kohlenwasserstoffresten, wobei diese Reste bevorzugt vom Typ (Cyclo)alkyl, Aralkyl, Alkylaryl, (Cyclo)-alkenyl, Aralkenyl, Alkenylaryl, Aryl sind; wobei $R^9$, $R^{10}$ noch bevorzugter jeweils einem $C_1$-$C_{10}$-Hydroxyalkyl, einem $C_1$-$C_{10}$-Alkoxyl, einem Polyol, vorteilhafterweise einem hydrierten Saccharid entsprechen;

die $R^2$ gleich oder verschieden sind,
die $R^3$ gleich oder verschieden sind,
die $R^6$ gleich oder verschieden sind,
die $R^7$ gleich oder verschieden sind,

$R^2$, $R^3$, $R^6$, $R^7$ gleich oder verschieden sind und H oder einem $C_1$-$C_{10}$-Alkyl entsprechen;
die $R^4$ gleich oder verschieden sind und einer zweiwertigen hydrophilen Gruppe entsprechen, bevorzugt ausgewählt aus aminierten und/oder hydroxylierten aromatischen Gruppen, aminierten und/oder hydroxylierten aromatischen und alkylischen Gruppen, aminierten und/oder hydroxylierten aromatischen und (cyclo)alkylenischen Gruppen, oder
aminierten und/oder hydroxylierten (Cyclo)alkylengruppen;
wobei diese Gruppe Alkoxyle und/oder (Poly)ether umfassen kann;
wobei $R^4$ bevorzugt eine Gruppe

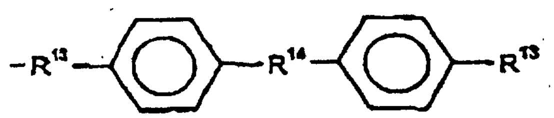

ist
mit $R^{13}$ eine Aminogruppe darstellend und $R^{14}$ eine ($C_1$-$C_4$)-Alkylengruppe darstellend;
die zweiwertige Gruppe $R^5$ ein Alkylen, bevorzugt $CH_2$, oder eine Gruppe darstellt, die der gleichen Definition wie $R^4$ entspricht,
wobei die Gruppe $R^8$ einem Hydroxyl, $A^4$, das der gleichen Definition wie $A^1$, $A^2$, $A^3$ entspricht, einem Wasserstoff oder -$NR^9R^{10}$ entspricht, mit $R^9$, $R^{10}$, die gleich oder verschieden sind und jeweils einen hydrophilen einwertigen Rest darstellen, bevorzugt ausgewählt aus aminierten und/oder (poly)hydroxylierten und/oder alkoxylierten und/oder (poly)veretherten Kohlenwasserstoffresten, wobei diese Reste bevorzugt vom Typ (Cyclo) alkyl, Aralkyl, Alkylaryl, (Cyclo)alkenyl, Aralkenyl, Alkenylaryl, Aryl sind;
wobei $R^8$ noch bevorzugter ein $C_1$-$C_{10}$-Hydroxyalkyl ist, ein $C_1$-$C_{10}$-Alkoxyl oder Polyol, bevorzugt ein hydriertes Saccharid,

2) Filtration durch semipermeable Membran, insbesondere Nanofiltration, der mittels dem Liganden (I) behandelten wässrigen Lösung, unter einem transmembranen Druck größer oder gleich 0,01 MPa, bevorzugt größer oder gleich 0,1 MPa, und noch bevorzugter zwischen 0,2 und 1,0 MPa, so dass einerseits ein Retentat, das mit wenigstens einer Lanthanoiden-, Actinoiden- oder anderer Übergangsmetallspezies angereichert ist, wobei die Spezies jene ist, die wenigstens teilweise mit dem Liganden (I) komplexiert ist, und andererseits ein Permeat gesammelt wird, das hinsichtlich dieser Spezies vermindert ist,

3) gegebenenfalls Rückgewinnung der zu trennenden Ligand-Spezie(s)-Komplexe im Retentat, und Behandlung der Komplexe mittels geeigneter Dekomplexierungsmittel, um einerseits die Liganden und andererseits die betreffenden Spezie(s) zu sammeln.

2. Verfahren gemäß Anspruch 1, **dadurch gekennzeichnet, dass** eine selektive Komplexierung der Ionen des (oder der) zu trennenden Metalls bzw. Metalle durchgeführt wird.

3. Verfahren gemäß Anspruch 1 oder 2, **dadurch gekennzeichnet, dass** Liganden (I) mit einer Molekülmasse größer als die Durchgangsgrenze der Nanofiltrationsmembran eingesetzt werden.

4. Verfahren gemäß Anspruch 1 oder Anspruch 2, **dadurch gekennzeichnet, dass** ein Ligand der Formel (I.1) eingesetzt wird:

(I.1)

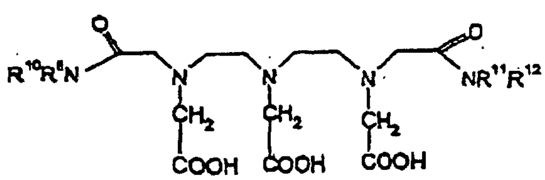

worin $R^9$, $R^{10}$, $R^{11}$, $R^{12}$ gleich oder verschieden sind und jeweils ein hydrophiles einwertiges Radikal darstellen, das der gleichen Definition wie jener für $R^9$, $R^{10}$ in Anspruch 1 angegebenen entspricht, wobei die Ethanoyl-, Methoxyethyl-, Sorbitoyl-Radikale besonders bevorzugt sind.

**5.** Verfahren gemäß einem der Ansprüche 1 bis 4, **dadurch gekennzeichnet, dass** mehrere metallische Spezies, die der Familie der Lanthanoide und/oder der Actinoide angehören, getrennt werden, wobei die Trennung durch aufeinanderfolgende Komplexierungen der Ionen von jeder der zu trennenden Spezies durchgeführt wird, indem der passende selektive Ligand für jede von ihnen (Schritt 1) ausgewählt wird und indem nach jeder Komplexierung eine Nanofiltration (Schritt 2) und eine Dekomplexierung/Sammeln (Schritt 3) durchgeführt werden.

**6.** Verfahren gemäß einem der Ansprüche 1 bis 5, **dadurch gekennzeichnet, dass** eine Nanofiltrationsmembran verwendet wird, die ausgehend von wenigstens einem Material hergestellt wurde, ausgewählt aus der Gruppe von Polymeren umfassend: Polyaramide, sulfonierte Polysulfone, Polybenzimidazolone, gepfropfte oder nichtgepfropfte Polyvinylfluoride, Polyamide, Celluloseester, Celluloseether oder perfluorierte Ionomere, Mischungen dieser Polymere und Copolymere, die ausgehend von Monomeren von wenigstens zwei dieser Polymere erhalten worden sind.

**7.** Verfahren gemäß einem der Ansprüche 1 bis 6, **dadurch gekennzeichnet, dass** die ausgewählte Membran eine Durchgangsgrenze, ausgedrückt in g/Mol, aufweist, die wie folgt definiert wird:

| | |
|---|---|
| | 100 - 5000 |
| bevorzugt | 200 - 2000 |
| und noch bevorzugter | 500 - 1500 |

**8.** Verfahren gemäß einem der Ansprüche 1 bis 7, **dadurch gekennzeichnet, dass** der pH des Mediums, bevorzugt der wässrigen Lösung, die das Komplexierungs/Trennungsmedium bildet, zwischen 1 bis 6 gehalten wird.

**9.** Komplexbildner der folgenden Formel:

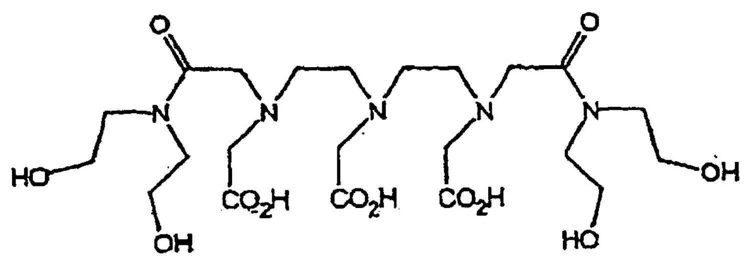

(I'.1)

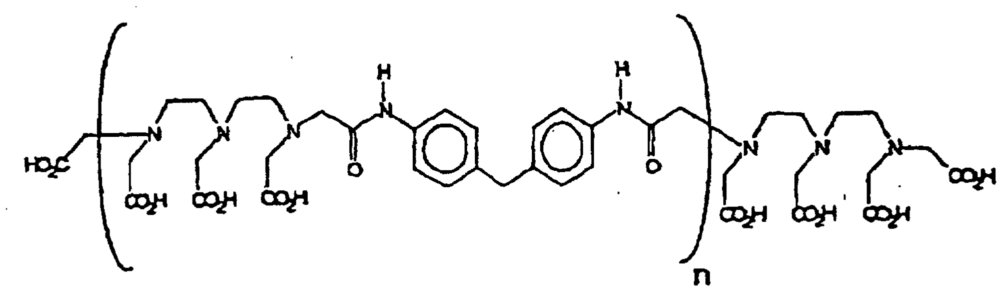

(I'.2)

n zwischen 1 und 100, bevorzugt zwischen 1 und 10.

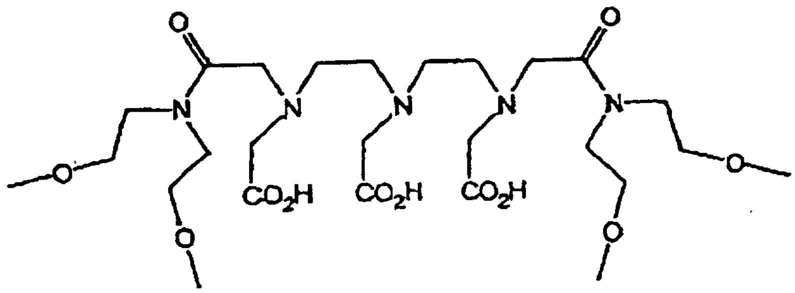

(I'3)

10. Anwendung des Verfahrens gemäß einem der Ansprüche 1 bis 8 und der Komplexbildner gemäß Anspruch 9 zur Herstellung von Seltenerdmetallen oder zur Behandlung von radioaktiven Abfällen, insbesondere jenen, die aus Vorgängen zur Behandlung/Recycling von gebrauchten nuklearen Brennstoffen stammen.

## Claims

1. Process for separating lanthanides from one another and/or lanthanides from actinides and/or actinides from one another and/or from other transition metals in an aqueous medium, **characterized in that** it comprises the following essential steps:

- 1 - treatment of the aqueous medium with at least one ligand selected from the group comprising ethylenediaminetetraacetic acid (EDTA) and/or linear or cyclic polyamino acids, preferably linear polyamino acids of formula **(I)** below:

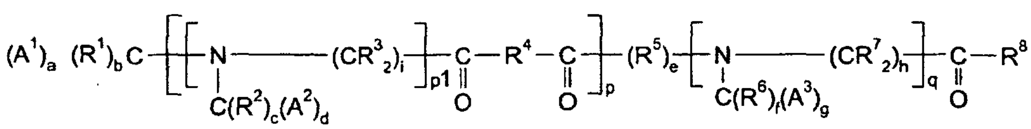

**(I)**

in which:

- $a = 0$ or 1 and $b = 2$ or 3;
- $c = 2$ or 3 and $d = 0$ or 1;
- $p = 0$ to 3, preferably 2;
- $p1 = 1$ to 4, preferably 2 or 3;
- $e = 0$ or 1;
- $q = 1$ to 4, preferably 2 or 3;
- $f = 2$ or 3 and $g = 0$ or 1;
- h and i, which are identical or different, are each 1, 2 or 3, preferably 1 or 2;
- $A^1$, $A^2$ and $A^3$ are identical to or different from one another and correspond to a monovalent acid group preferably selected from the group comprising:
  $-COOR$, $-PO_3R'$ and $-SO_3R''$,
  where R, R', R'' = H or a cation;
- the radicals $R^1$ are identical to or different from one another and correspond to:

  Δ H,
  Δ $C_1$-$C_{10}$ alkyl or

Δ

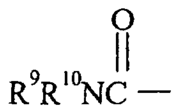

,

where a = 0 and $R^9$ and $R^{10}$ are identical or different and each correspond to hydrogen or a hydrophilic monovalent radical preferably selected from amino and/or (poly)hydroxylated and/or alkoxylated and/or (poly)etherified hydrocarbon radicals, these radicals preferably being of the (cyclo)alkyl, aralkyl, alkylaryl, (cyclo)alkenyl, aralkenyl, alkenylaryl or aryl type, $R^9$ and $R^{10}$ each corresponding even more preferably to a $C_1$-$C_{10}$ hydroxyalkyl, a $C_1$-$C_{10}$ alkoxy or a polyol, advantageously a hydrogenated saccharide;

- the radicals $R^2$ are identical to or different from one another;
- the radicals $R^3$ are identical to or different from one another;
- the radicals $R^6$ are identical to or different from one another;
- the radicals $R^7$ are identical to or different from one another, $R^2$, $R^3$, $R^6$ and $R^7$ being identical to or different from one another and corresponding to H or a $C_1$-$C_{10}$ alkyl;
- the radicals $R^4$ are identical to or different from one another and correspond to a hydrophilic divalent group preferably selected from aromatic amino and/or hydroxylated groups, aromatic and alkyl amino and/or hydroxylated groups, aromatic and (cyclo)alkylenic amino and/or hydroxylated groups and (cyclo)alkylenic amino and/or hydroxylated groups,
  it being possible for this group to contain alkoxy and/or (poly)ether radicals,
  $R^4$ preferably being a group

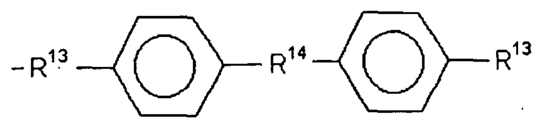

where $R^{13}$ is an amino group and $R^{14}$ is a $C_1$-$C_4$ alkylene;
- the divalent group $R^5$ is an alkylene, preferably $CH_2$, or a group having the same definition as $R^4$;
- and the group $R^8$ corresponds to a hydroxyl, to $A^4$ having the same definition as $A^1$, $A^2$ and $A^3$, to hydrogen or to $-NR^9R^{10}$, where $R^9$ and $R^{10}$ are identical to or different from one another and are a hydrophilic monovalent radical preferably selected from amino and/or (poly)hydroxylated and/or alkoxylated and/or (poly)etherified hydrocarbon radicals, these radicals preferably being of the (cyclo)alkyl, aralkyl, alkylaryl, (cyclo)alkenyl, aralkenyl, alkenylaryl or aryl type, $R^8$ even more preferably being a $C_1$-$C_{10}$ hydroxyalkyl, a $C_1$-$C_{10}$ alkoxy or a polyol, advantageously a hydrogenated saccharide;

- 2 - filtration of the aqueous solution treated with the ligand (**I**), on semipermeable membrane, in particular nanofiltration, under a transmembrane pressure greater than or equal to 0.01 MPa, preferably greater than or equal to 0.1 MPa and even more preferably of between 0.2 and 1.0 MPa,
so as to collect on the one hand a retentate enriched in at least one species of lanthanide, actinide or other transition metal, this species being that which is at least partially complexed with the ligand (**I**), and on the other hand a permeate impoverished in said species; and optionally
- 3 - recovery of the ligand/species complexes to be separated in the retentate, and treatment of these complexes with one or more appropriate decomplexing agents so as to collect on the one hand the ligands and on the other hand the target species.

2. Process according to claim 1, **characterized in that** the ions of the metal(s) to be separated are subjected to selective complexation.

3. Process according to claim 1 or 2, **characterized in that** the molecular weight of the ligands (**I**) used is greater than the cut-off threshold of the nanofiltration membrane.

4. Process according to claim 1 or claim 2, **characterized in that** a ligand of formula (**I.1**) is used:

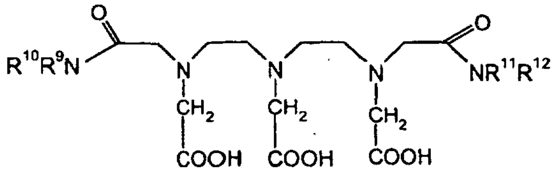

(I.1)

in which $R^9$, $R^{10}$, $R^{11}$ and $R^{12}$ are identical to or different from one another and are each a hydrophilic monovalent radical having the same definition as that given for $R^9$ and $R^{10}$ in claim 1, ethanoyl, methoxyethyl and sorbitoyl radicals being more especially preferred.

5. Process according to any one of claims 1 to 4, **characterized in that** several metal species belonging to the lanthanide and/or actinide family are separated, said separation being effected by successive complexations of the ions of each of these species to be separated, the appropriate selective ligand being chosen for each species (step 1) and a nanofiltration (step 2) and a decomplexation/collection (step 3) being carried out after each complexation.

6. Process according to any one of claims 1 to 5, **characterized in that** the nanofiltration membrane used is made of at least one material selected from the group of polymers comprising:

   polyaramides, sulfonated polysulfones, polybenzimidazolones, grafted or non-grafted polyvinylidene fluorides, polyamides, cellulose esters, cellulose ethers, perfluorinated ionomers, associations of these polymers, and copolymers obtained from monomers of at least two of these polymers.

7. Process according to any one of claims 1 to 6, **characterized in that** the selected membrane has a cut-off threshold, expressed in g/mol, which is defined as follows:

| | |
|---|---|
| | 100 - 5000 |
| preferably | 200 - 2000 |
| and even more preferably | 500 - 1500 |

8. Process according to any one of claims 1 to 7, **characterized in that** the pH of the medium, preferably the aqueous solution, constituting the complexation/separation medium is fixed at between 1 and 6.

9. Complexing agents according to claim 9 of the following formulae:

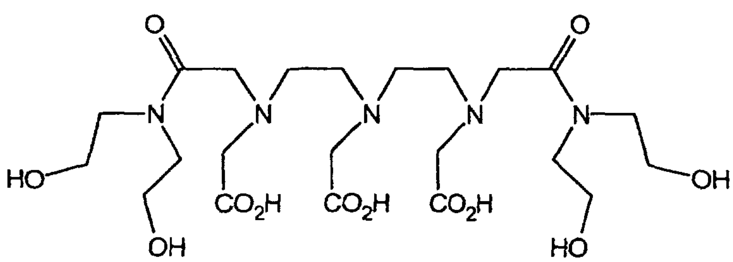

(I'.1)

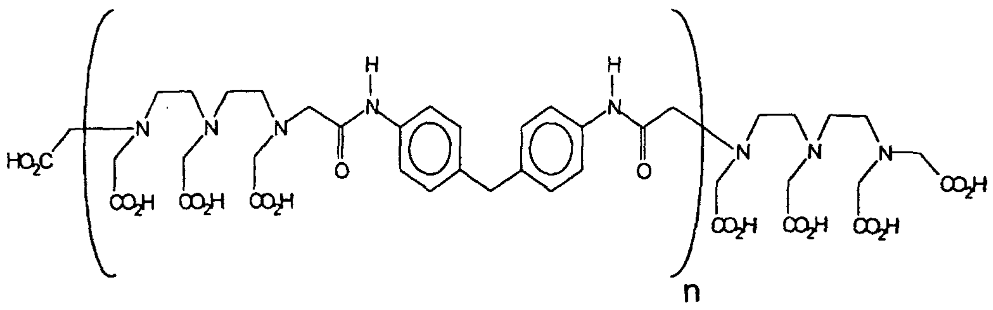

(I'.2)

n being between 1 and 100, preferably between 1 and 10,

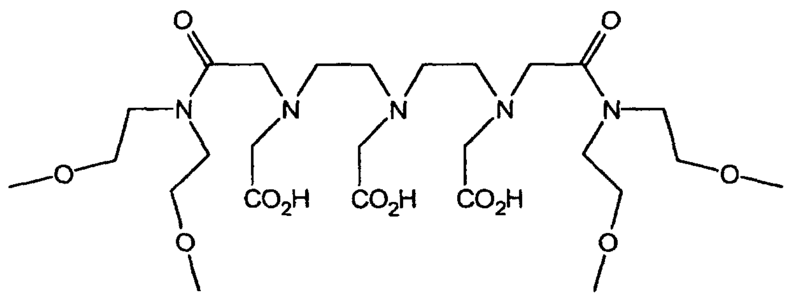

(I'3)

**10.** Application of the process according to any one of claims 1 to 8 and of the complexing agents according to claims 9 to the production of rare earths or the processing of nuclear waste, especially that originating from the processing-recycling operations carried out on spent nuclear fuels.

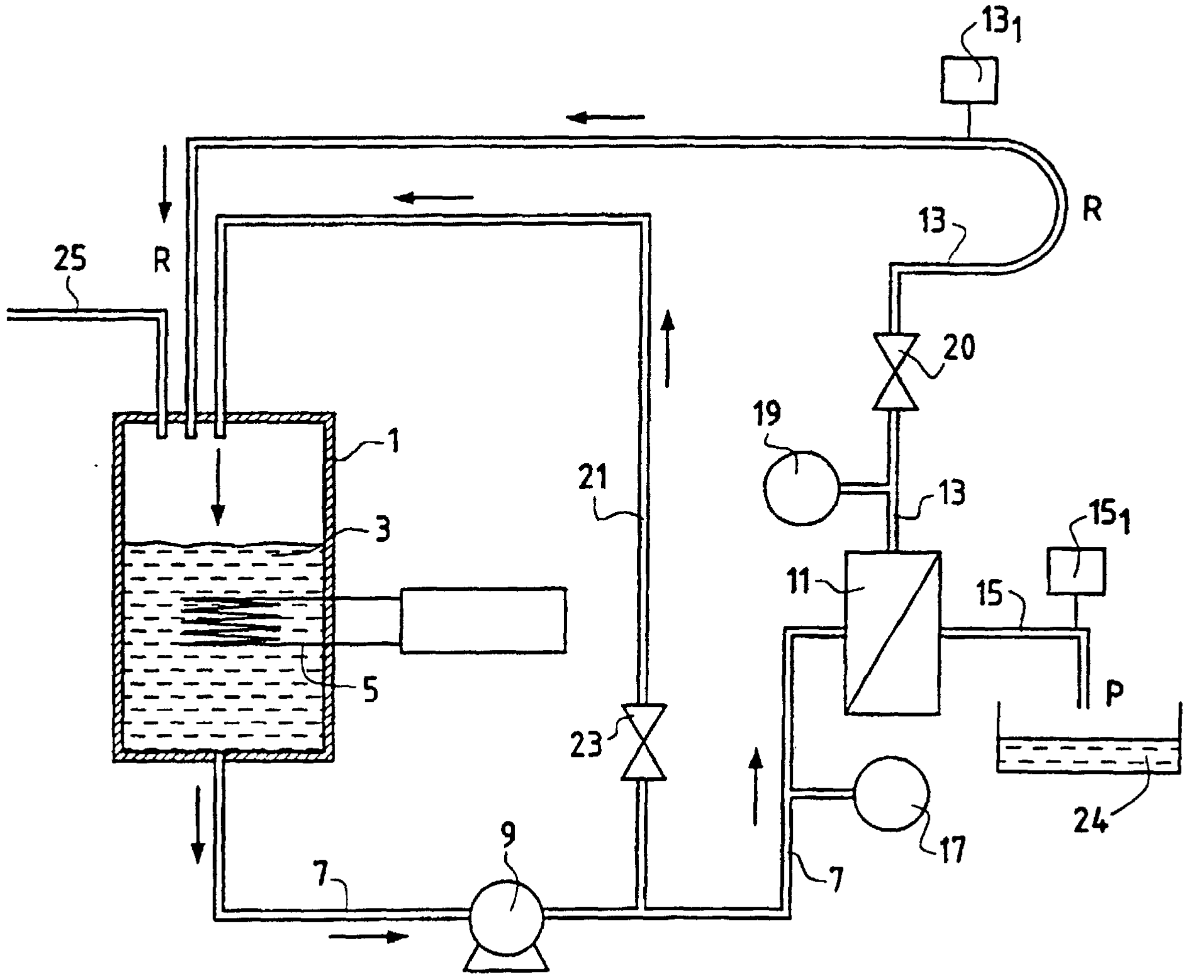


FIG.1

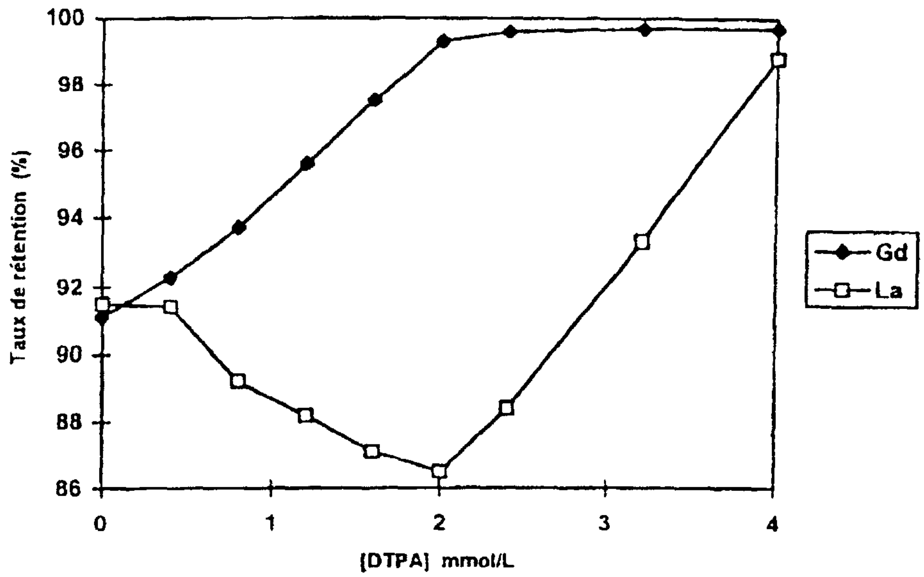
100
98
96
94
92
90
88
86
Taux de rétention (%)
0
1
2
3
4
[DTPA] mmol/L
Gd
La

FIG.2

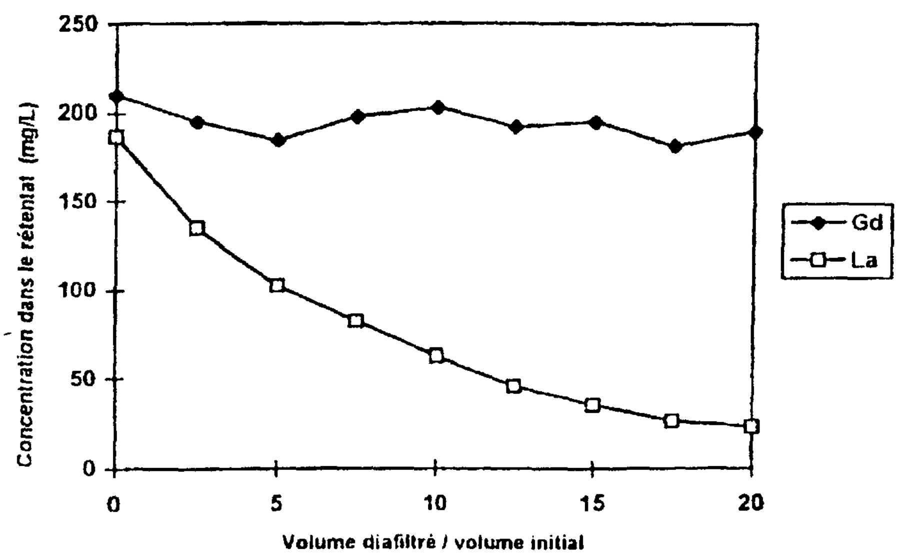
250
200
150
100
50
0
Concentration dans le rétentat (mg/L)
0
5
10
15
20
Volume diafiltré / volume initial
Gd
La

FIG.3

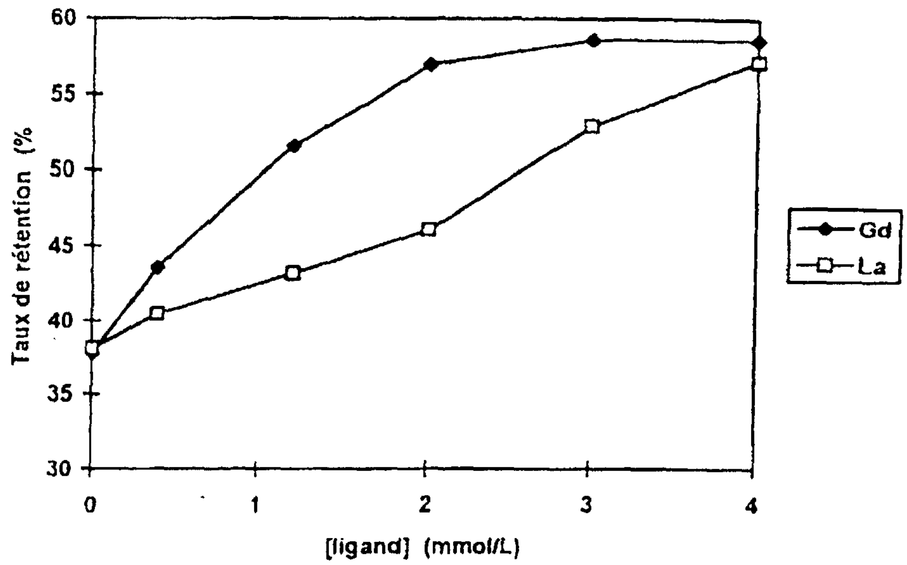
Taux de rétention (%
60
55
50
45
40
35
30
0
1
2
3
4
[ligand] (mmol/L)
Gd
La

FIG.4

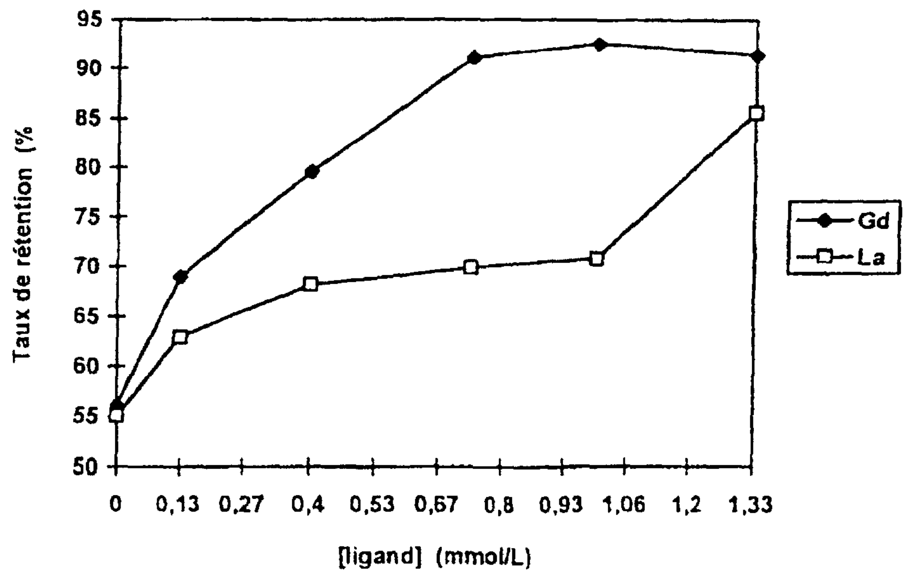
Taux de rétention (%
95
90
85
80
75
70
65
60
55
50
0
0,13
0,27
0,4
0,53
0,67
0,8
0,93
1,06
1,2
1,33
[ligand] (mmol/L)
Gd
La

FIG.5

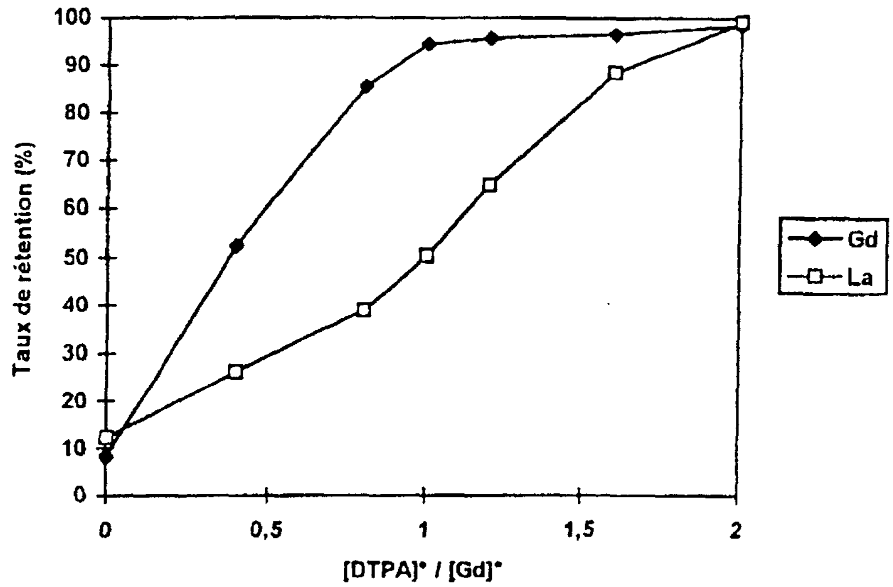
100
90
80
70
60
50
40
30
20
10
0
Taux de rétention (%)
0
0,5
1
1,5
2
[DTPA]° / [Gd]°
Gd
La

FIG.6

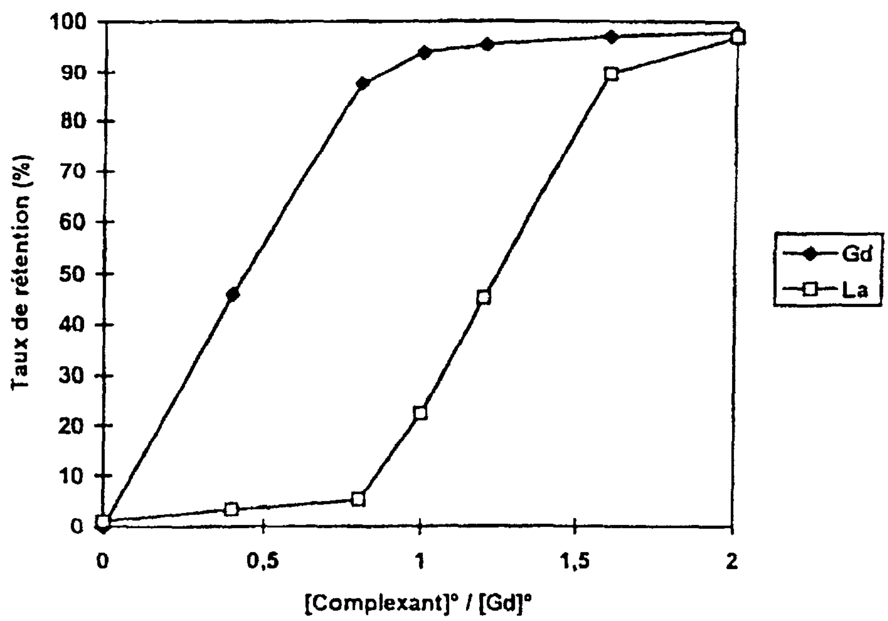
100
90
80
70
60
50
40
30
20
10
0
Taux de rétention (%)
0
0,5
1
1,5
2
[Complexant]° / [Gd]°
Gd
La

FIG.7

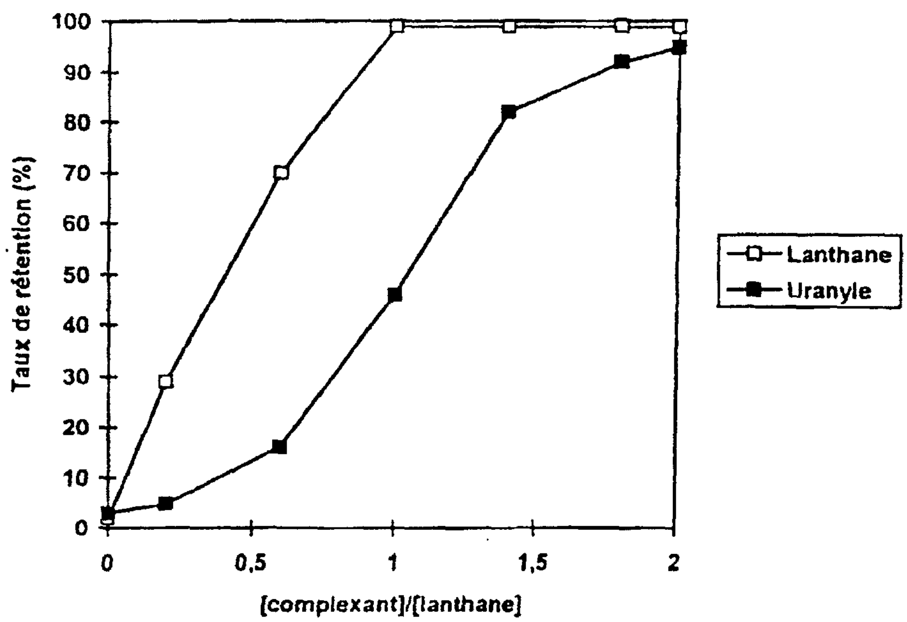
100
90
80
70
60
50
40
30
20
10
0
Taux de rétention (%)
0
0,5
1
1,5
2
[complexant]/[lanthane]
Lanthane
Uranyle

FIG.8